# EUROPEAN PATENT APPLICATION

(11) **EP 4 804 444 A1**
(43) Date of publication of application: **09.09.2026**
(21) Application number: 23957363.7
(22) Date of filing: 03.11.2023
(51) Int. Cl.: H04L 5/00

(54) **COMMUNICATION METHOD, APPARATUS AND DEVICE, AND CHIP, STORAGE MEDIUM, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); CHEN, Wenhong, Dongguan, Guangdong 523860 (CN)
(74) Representative: Grassi, Stefano
(86) International application number: PCT/CN2023/129774
(87) International publication number: WO 2025/091507

(57) **Abstract**

Provided in the present application are a communication method, apparatus and device, and a chip, a storage medium, a product and a program. The method comprises: a terminal device sending first information to a network device, wherein the first information is configured to indicate a first pilot signal.

## Description

### TECHNICAL FIELD

The present disclosure relates to the technical field of communications, and particularly to a method, an apparatus and a device for communication, a chip, a storage medium, a product, and a program.

### BACKGROUND

In the related art, a pilot signal is typically pre-defined, or is configured through a radio resource control (RRC) signaling transmitted by a network device, these configuration methods are not flexible enough.

### SUMMARY

The present disclosure provides a method, an apparatus and a device for communication, a chip, a storage medium, a product, and a program.

According to a first aspect, a method for communication according to an embodiment of the present disclosure includes that:
a terminal device transmits first information to a network device, where the first information indicates a first pilot signal.

According to a second aspect, a method for communication according to an embodiment of the present disclosure includes that:
a network device receives first information transmitted by a terminal device, where the first information indicates a first pilot signal.

According to a third aspect, an apparatus for communication according to an embodiment of the present disclosure is applied to a terminal device, and the apparatus includes:
a first transmission unit, configured to transmit first information to a network device, where the first information indicates a first pilot signal.

According to a fourth aspect, an apparatus for communication according to an embodiment of the present disclosure is applied to a network device, and the apparatus includes:
a second receiving unit, configured to receive first information transmitted by a terminal device, where the first information indicates a first pilot signal.

According to a fifth aspect, a communication device according to an embodiment of the present disclosure includes a processor and a memory. The memory is configured to store computer-executable instructions, and the processor is connected with the memory to perform the method for communication of the first or second aspect described above by executing the computer-executable instructions.

According to a sixth aspect, a chip according to an embodiment of the present disclosure is used for implementing the method for communication according to the first aspect or the second aspect.

Specifically, the chip includes a processor for calling a computer program from a memory and running the computer program to cause a device on which the chip is mounted to perform the method for communication of the first aspect or the second aspect described above.

According to a seventh aspect, a computer-readable storage medium is provided by an embodiment of the present disclosure, in which a computer program is stored, and when executed by at least one processor, the computer program implements the method for communication of the first aspect or the second aspect.

According to an eighth aspect, a computer program product is provided by an embodiment of the present disclosure. The computer program product includes a computer storage medium storing a computer program, the computer program including instructions executable by at least one processor, and when the instructions are executed by at least one processor, the method for communication of the first or second aspect described above is implemented.

According to a ninth aspect, a computer program is provided by an embodiment of the present disclosure, when run on the computer, the computer program causes the computer to perform the method for communication of the first aspect or the second aspect.

An embodiment of the present disclosure provides a communication method, where a terminal device may transmit first information to a network device, and correspondingly, the network device may receive the first information transmitted by the terminal device, where the first information is used to indicate a first pilot signal. That is, the terminal device may indicate the selected first pilot signal to the network device through the first information. In this way, the network device can determine a pilot signal suitable for the terminal device based on the first information, thereby communicating with the terminal device according to the pilot signal, and improving transmission performance.

### BRIEF DESCRIPTION OF THE DRAWINGS

The accompanying drawings described herein are intended to provide a further understanding of the present disclosure and constitute a part of the present disclosure, and the schematic embodiments of the present disclosure and the description thereof are intended to explain the present disclosure, and do not constitute an undue limitation to the present disclosure. In the drawings:
FIG. 1 is a schematic diagram of a communication architecture.
FIG. 2A is a first schematic diagram of a scenario of a one-symbol demodulation reference signal.
FIG. 2B is a first schematic diagram of a scenario of a two-symbol demodulation reference signal.
FIG. 3A is a second schematic diagram of a scenario of a one-symbol demodulation reference signal.
FIG. 3B is a second schematic diagram of a scenario of a two-symbol demodulation reference signal.
FIG. 4 is a first schematic flowchart of a communication method according to an embodiment of the present disclosure.
FIG. 5 is a first schematic diagram of a scenario of time-frequency resources for transmitting a pilot signal and a data signal according to an embodiment of the present disclosure.
FIG. 6 is a second schematic diagram of a scenario of time-frequency resources for transmitting a pilot signal and a data signal according to an embodiment of the present disclosure.
FIG. 7 is a second schematic flowchart of a communication method according to an embodiment of the present disclosure.
FIG. 8 is a first schematic diagram of a scenario of a frequency domain location of a time-frequency resource occupied by a pilot signal according to an embodiment of the present disclosure.
FIG. 9 is a second schematic diagram of a scenario of a frequency domain location of a time-frequency resource according to an embodiment of the present disclosure.
FIG. 10A is a third schematic flowchart of a communication method according to an embodiment of the present disclosure.
FIG. 10B is a fourth schematic flowchart of a communication method according to an embodiment of the present disclosure.
FIG. 10C is a fifth schematic flowchart of a communication method according to an embodiment of the present disclosure.
FIG. 10D is a sixth schematic flowchart of a communication method according to an embodiment of the present disclosure.
FIG. 11 is a schematic structural diagram of a communication apparatus 1100 according to an embodiment of the present disclosure.
FIG. 12 is a schematic structural diagram of a communication apparatus 1200 according to an embodiment of the present disclosure.
FIG. 13 is a schematic structural diagram of a communication device according to an embodiment of the present disclosure.
FIG. 14 is a schematic structural diagram of a chip according to an embodiment of the present disclosure.
FIG. 15 is a schematic block diagram of a communication system according to an embodiment of the present disclosure.

### DETAILED DESCRIPTION

Hereinafter, technical solutions in embodiments of the present disclosure will be described with reference to the accompanying drawings in the embodiments of the present disclosure, and it is obvious that the described embodiments are part of the embodiments of the present disclosure, but not all the embodiments. Based on the embodiments in the present disclosure, all other embodiments obtained by those skilled in the art without creative work fall within the scope of protection of the present disclosure.

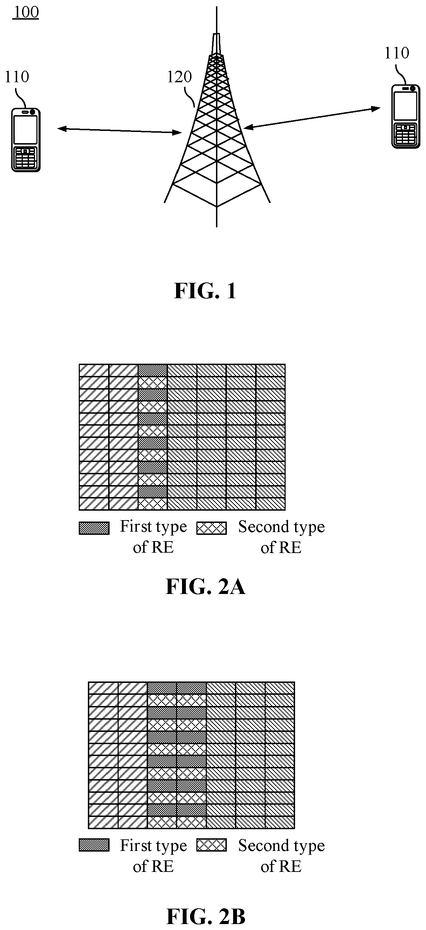

FIG. 1 is a schematic diagram of a communication architecture.

As illustrated in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solutions of the embodiments of the present disclosure can be applied to various communication systems, such as a long term evolution (LTE) system, an LTE time division duplex (TDD) system, a universal mobile telecommunication system (UMTS), an Internet of things (IoT) system, and a narrow band Internet of things (NB-IoT) system, an enhanced machine-type communication (eMTC) system, a 5G communication system (also referred to as a new radio (NR) communication system), or a future communication system, etc.

In the communication system 100 illustrated in FIG. 1, the network device 120 may be an access network device that communicates with the terminal device 110. Access network device may provide communication coverage for a particular geographic area and may communicate with terminal devices 110 located within that coverage area.

The network device 120 may be an evolutional node B (eNB) or eNodeB in an LTE system, a next generation radio access network (NG RAN) device, a base station (gNB) in an NR system, a radio controller in a cloud radio access network (CRAN), or may be a relay station, an access point, an in-vehicle device, a wearable device, a hub, a switch, a bridge, a router, a network device in a future evolved public land mobile network (PLMN), or the like.

The terminal device 110 may be any terminal device, which includes, but is not limited to, a terminal device connected with the network device 120 or another terminal device using wired or wireless connections.

For example, the terminal device 110 may refer to an access terminal, a user equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device with wireless communication functionality, a computing device or another processing device connected to a wireless modem, a vehicle-mounted device, a wearable device, a terminal device in a 5G network, or a terminal device in a future evolution network, or the like.

The terminal device 110 may be used for device-to-device (D2D) communication.

FIG. 1 exemplarily illustrates one network device and two terminal devices, and it should be understood that the communication system 100 may include multiple network devices and another number of terminal devices may be included within the coverage range of each network device, which is not limited by the embodiments of the present disclosure.

It should be noted that FIG. 1 only illustrates a system applicable to the present disclosure in the form of an example, and of course, the method shown in the embodiment of the present disclosure can also be applied to other systems. Further, the terms "system" and "network" are often used interchangeably herein.

It should be understood that the term "and/or" herein is merely an association describing related objects, and means that there may be three relationships, for example, A and/or B, which may mean: A exists alone, A and B exist simultaneously, and B exists alone. In addition, the character "/" in the present disclosure generally indicates that the related objects before and after are in an "or" relationship.

It should also be understood that the "indication" mentioned in the embodiments of the present disclosure may be a direct indication, an indirect indication, or an associated relationship. For example, A indicates B, which may mean that A directly indicates B, for example, B can be acquired by A; it may also mean that A indicates B indirectly, for example A indicates C, and B can be acquired through C; or it may also indicate that there is an association between A and B.

It should also be understood that "correspondence" mentioned in the embodiments of the present disclosure may indicate that there is a direct correspondence or indirect correspondence between the two, may indicate that there is a correlation relationship between the two, or may indicate a relationship between indicating and being indicated, configuring and being configured, or the like.

It should also be understood that the "predefined" or "predefined rule" mentioned in the embodiments of the present disclosure may be implemented by storing corresponding codes, tables, or other methods that can be used to indicate relevant information in advance in devices (including, for example, terminal devices and network devices), and the present disclosure does not limit specific implementations thereof. For example, "predefined" may refer to defined in the protocol. It should also be understood that in the embodiment of the present disclosure, the "protocol" may refer to a standard protocol in the field of communications, and may include, for example, an LTE protocol, an NR protocol, and related protocols applied to future communication systems, and the present disclosure is not limited thereto.

In order to facilitate understanding of the technical solutions of the embodiments of the present disclosure, the related technologies of the embodiments of the present disclosure will be described below, and the related technologies below can be arbitrarily combined with the technical solutions of the embodiments of the present disclosure as options, and all of them belong to the scope of protection of the embodiments of the present disclosure.

In the related art, a basic workflow of a wireless communication system may include the following steps.

At a transmitting end, bit stream information to be transmitted is channel-encoded to obtain encoded bit information; the encoded bit information is modulated to obtain a modulation symbol; the modulation symbol and a demodulation reference signal (DMRS) are inserted into a corresponding time-frequency resource, and is then subsequently processed to obtain an orthogonal frequency division multiplexing (OFDM) symbol, or a single-carrier frequency division multiple access (SC-FDMA) symbol, or other forms of sub-carrier symbol.

It should be noted that the above flow is described by taking OFDM and SC-FDMA systems as examples, and is also applicable to other systems.

For example, one or more of the following may be used during modulating the encoded bits to obtain the modulation symbol: binary phase shift keying (BPSK), quadrature phase shift keying (QPSK), 16 quadrature amplitude modulation (QAM), 64 QAM, 256 QAM, 512 QAM, 1024 QAM, 2048 QAM, or 4096 QAM.

Exemplarily, a modulation symbol and a DMRS signal are inserted into a corresponding resource element (RE).

At a receiving end, a receiver estimates a channel by measuring a DMRS signal, demodulates the modulation symbol, and performs channel decoding to obtain the bit information transmitted by the transmitting end.

It should be understood that the above-described steps may be jointly iterated, and the above-described sequence may not necessarily be strictly performed. For example, the information obtained through decoding may be used for channel estimation and/or for demodulating a modulation symbol.

It should be noted that whether for downlink transmission (DL Transmission), uplink transmission (UL Transmission), or sidelink transmission (SL Transmission), the basic workflow of a wireless communication system is similar.

For example, the downlink transmission may be a transmission from a network device to a terminal device, the uplink transmission may be a transmission from a terminal device to a network device, and the sideline transmission may be a transmission between terminal devices.

The receiving end needs to use a DMRS signal in order to obtain the bit information transmitted by the transmitting end.

Due to the complexity and time-varying of the wireless channel environment, the receiver's estimation and recovery of wireless channel directly affects the final data recovery performance. In the traditional communication system, for a control channel (that is, a channel for transmitting control information), the DMRS signal is relatively fixed, that is to say, the density and/or pattern of the DMRS signal does not need to change dynamically. At this time, the design of the DMRS signal will be more conservative, so that it can adapt to various environments of the wireless channel. In a wireless communication system, for a data channel (i.e., a channel for transmitting data), in order to reduce the overhead of the DMRS signal, different densities and/or patterns of the DMRS signal are often designed, so that the DMRS signal can be configured or indicated according to the current environment of the wireless channel.

The following takes a data DMRS signal in a NR communication system as an example for a brief introduction.

In the NR communication system, DMRS signals may be classified into a pre-DMRS signal (which may be referred to as a Front-Loaded DMRS signal) and a post-DMRS signal (which may be referred to as an Additional DMRS signal).

For example, for a high vehicle speed UE, in order to improve channel estimation performance, some DMRS signals are added on the basis of the front-loaded DMRS signal, for example, the high vehicle speed UE may transmit an additional DMRS signal at a certain position in the rear part of the allocated time domain resource, so that the post-DMRS signal can be obtained.

It should be noted that the front-loaded DMRS signal is usually located in the first few OFDM symbols of a slot, and a pattern of the post-DMRS signal is a repetition of the pattern of the front-loaded DMRS signal (for example, using the same frequency domain resource and using the same number of OFDM symbols), which is used to ensure performance in high-speed scenarios. The front-loaded DMRS signal may occupy 1 or 2 OFDM symbols and is configured by the network device.

It should also be noted that NR may support two different types of DMRS signals, namely DMRS signals of Type 1 and DMRS signals of Type 2. Different types of DMRS signals have different resource occupancy manners. In the following, two different DMRS signal types are described with reference to FIGS. 2A to 3B by taking a small cell representing one RE, 12 subcarriers in a frequency domain resource as one resource block (RB), and 7 symbols in a time domain resource as examples.

As illustrated in FIGS. 2A and 2B, two code division multiplexing (CDM) sets may be supported on one symbol (e.g., an OFDM symbol) of each physical resource block (PRB), and each CDM set contains 6 subcarriers. The first CDM set is carried by the first type of REs, and the second CDM set is carried by the second type of REs. Each CDM set can support two ports, and the two ports are kept orthogonal through orthogonal cover codes (OCC), that is, an OCC used by one port is [+1 +1 +1 +1 +1 +1], and an OCC used by the other port is [+1 -1 +1 -1 +1 -1].

Exemplarily, as illustrated in FIG. 2A, up to 4 orthogonal ports may be supported on one symbol.

Exemplarily, as illustrated in FIG. 2B, up to eight orthogonal ports may be supported on two symbols, and a time domain orthogonal cover code (TD-OCC) may be employed between the two symbols. For example, the first CDM set on the first symbol contains ports {1000, 1001}, and the second CDM set on the first symbol contains ports {1002, 1003}; the first CDM set on the second symbol contains ports {1004, 1005} and the second CDM set on the second symbol contains ports {1006, 1007}.

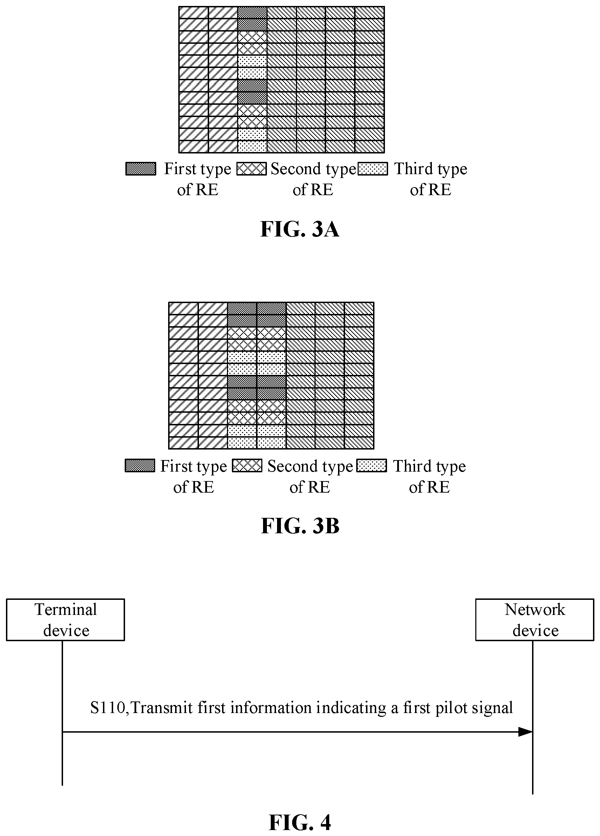

As illustrated in FIGS. 3A and 3B, three CDM sets may be supported on one symbol of each PRB, and each CDM set contains four subcarriers adjacent in pairs. The first CDM set is carried by the first type of REs, the second CDM set is carried by the second type of REs, and the third CDM set is carried by the third type of REs. Each CDM set can support two ports, and the two ports are maintained orthogonal through OCCs, that is, an OCC used by one port is [+1 +1 +1 +1], and an OCC used by the other port is [+1 -1 +1 -1].

Exemplarily, as illustrated in FIG. 3A, up to 6 orthogonal ports may be supported on one symbol.

Exemplarily, as illustrated in FIG. 3B, up to 12 orthogonal ports may be supported on two symbols, and TD-OCC is employed between the two symbols. For example, the first CDM set on the first symbol contains ports {1000, 1001}, the second CDM set on the first symbol contains ports {1002, 1003}, and the third CDM set on the first symbol contains ports {1004, 1005}; the first CDM set on the second symbol contains ports {1006, 1007}, the second CDM set on the second symbol contains ports {1008, 1009}, and the third CDM set on the second symbol contains ports {1010, 1011}.

In the embodiments of the present disclosure, a RE, a RB, and a symbol are mentioned many times, and the RE, the RB, and the symbol will be briefly described below.

RE: a smallest time-frequency resource unit in a wireless communication system. For example, in an NR or LTE system, one RE corresponds to one subcarrier in the frequency domain, and one RE corresponds to one symbol in the time domain.

RB: a RB may refer to K consecutive subcarriers in the frequency domain. Further, in some systems, the RB may also refer to K consecutive subcarriers in the frequency domain, and M consecutive symbols in the time domain.

For example, the value of K may be one or more of 8, 12, or 16, or may be other values, and the embodiments of the present disclosure are not limited thereto.

For example, the value of M may be one or more of 6, 7, 13, or 14, or may be other values, and the embodiments of the present disclosure are not limited thereto.

It should be noted that in the embodiment of the present disclosure, no distinction is made between RB and PRB, and the RB and PRB in the embodiment of the present disclosure are collectively referred to as PRB.

Symbol: a symbol in the embodiment of the present disclosure may be an OFDM symbol, a SC-FDMA symbol, or another form of multi-subcarrier symbol, and the embodiment of the present disclosure is not limited thereto.

The SC-FDMA symbol may also be referred to as a discrete Fourier transform-spread orthogonal frequency division multiplexing (DFT-SOFDM) symbol, or the SC-FDMA symbol may also be referred to as a multi-carrier symbol using a transform precoder, or the SC-FDMA may also be referred to as an OFDM symbol using a transform precoder.

In the related art, the pilot signal and the data signal occupy different time-frequency resources, the pilot signal and the data signal are placed orthogonally on the time-frequency resources, and there is no overlap between the pilot signal and the data signal on the time-frequency resources. That is, a pilot signal or a data signal may be placed on one time-frequency resource, but the pilot signal and the data signal cannot be placed at the same time. However, when the total time-frequency resources are constant, when the terminal device moves at a high speed, in order to improve channel estimation performance, the pilot signal often needs to occupy more time-frequency resources, resulting in the time-frequency resources occupied by the data signal will be reduced, thus reducing the transmission rate and transmission reliability of the data signal.

It should be noted that in a code division multiple access (CDMA) system, although the pilot signal and the data signal can be transmitted on the same time-frequency resource, both the pilot signal and the data signal need to undergo additional spread-spectrum processing. For example, the pilot signal and the data signal need to be distinguished using different orthogonal codes. The embodiments of the present disclosure are mainly applied to OFDM systems/SC-FDMA systems and other systems based on multiple subcarriers, where modulation symbols of data signals (such as QPSK, 16QAM, etc.) and modulation symbols of demodulated pilot signals are directly transmitted on the same time-frequency resource, and the pilot signal and the data signal do not need to be subjected to additional spread-spectrum processing.

In addition, in the related art, the pilot signal is typically configured according to a pre-agreement (e.g., protocol agreement and/or broadcast channel notification) or through RRC signaling transmitted by a network device. For example, in the NR system, when a terminal device performs initial access, the pilot signal used may be determined according to a protocol agreement and/or a broadcast channel notification. The terminal device uses this pilot signal during receiving system messages, random access procedures and subsequent transmissions. Configuration of a new pilot signal can only be obtained from RRC signaling when the terminal device enters a RRC connected state or after the terminal device enters the RRC connected state.

However, the pre-agreed manner, the broadcast channel notification manner, or the RRC configuration manner above may lead to poor configuration flexibility. This is because the pre-agreed manner or the broadcast channel notification manner often needs to consider all possible terminal devices in a cell, which may lead to a non-optimal configuration of pilot signals for some specific terminal devices. However, updating the configuration of pilot signals through RRC signaling will prevent some terminal devices from using their optimized pilot signal configurations before entering the RRC connected state. Exemplarily, for a terminal device moving at a high speed, it is necessary to configure more additional DMRS signals to achieve good performance; while for a terminal device that supports orthogonal placement of pilot signals and data signals, the network device can adopt an optimized configuration scheme of pilot signals before RRC signaling to improve time-frequency resource utilization.

Based on this, an embodiment of the present disclosure provides a communication method, in which a terminal device may transmit first information to a network device, and correspondingly, the network device may receive the first information transmitted by the terminal device. The first information is used to indicate a first pilot signal. That is, the terminal device may indicate the selected first pilot signal to the network device through the first information. In this way, the network device can determine a pilot signal suitable for the terminal device based on the first information (for example, the pilot signal may be a first pilot signal or a pilot signal selected by the network according to a first pilot signal recommended by the terminal device and other considerations), so as to communicate with the terminal device according to the pilot signal, thereby improving the transmission performance.

In order to facilitate understanding of the technical solutions of the embodiments of the present disclosure, the technical solutions of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. Embodiments of the present disclosure include at least some of the following.

FIG. 4 is a first schematic flowchart of a method for communication according to an embodiment of the present disclosure. As illustrated in FIG. 4, the method may include the following operations.

At S410, a terminal device transmits first information to a network device, where the first information is used to indicate a first pilot signal.

Accordingly, the network device may receive the first information transmitted by the terminal device.

The terminal device and/or the network device may predetermine multiple pilot signals. The first pilot signal may be any one of the multiple pilot signals. The predetermination herein may be predetermined according to a protocol, and/or predetermined by the network device through a broadcast message/system message, which is not limited by the embodiment of the present disclosure.

It should also be noted that, in the embodiment of the present disclosure, a typical example of the pilot signal is a DMRS signal. The pilot signal may also be a channel state information reference signal (CSI-RS), a phase tracking reference signal (PT-RS), or the like, and the embodiment of the present disclosure is not limited thereto.

In some embodiments, the first pilot signal may be related to at least one of the following:
a type of pilot signal supported by the terminal device;
a speed of the terminal device; or,
a wireless channel environment between the terminal device and the network device.

In one possible implementation, the first pilot signal may be related to a type of pilot signal supported by the terminal device. It can be understood that the first pilot signal may be determined based on the type of pilot signal supported by the terminal device. That is, the terminal device may select, according to the type of the pilot signal supported by the terminal deivce, a matched first pilot signal from multiple pilot signals defined in advance.

In some embodiments, the types of pilot signals may include a first type of pilot signal, and a second type of pilot signal. The first pilot signal may be a first type of pilot signal or a second type of pilot signal.

The first type of pilot signal refers to a pilot signal in which the occupied time-frequency resources are not used for transmitting a data signal. It can be understood that the REs used by the first type of pilot signal and the REs used by the data signal do not overlap, that is, the first type of pilot signal and the data signal are orthogonal in time-frequency resources. In the embodiment of the present disclosure, the first type of pilot signal may also be referred to as an "orthogonal pilot signal" or an "orthogonal DMRS".

It should be noted that, unless otherwise specified (for example, a data channel is specifically specified), the data signal mentioned in the embodiment of the present disclosure may be data to be transmitted (for example, data transmitted from an upper layer to a physical layer, data of a service, etc.), or control information (for example, physical layer downlink control information, physical layer uplink control information, etc.), and the embodiment of the present disclosure is not limited thereto.

Exemplarily, data signals (including control information) may be transmitted through one or more of the following channels: a physical downlink shared channel (PDSCH), a physical uplink shared channel (PUSCH), a physical sidelink shared channel (PSSCH), a physical downlink control channel (PDCCH), a physical uplink control channel (PUCCH), a physical sidelink control channel (PSCCH), a physical sidelink feedback channel (PSFCH), and the like.

Further, the second type of pilot signal refers to a pilot signal in which at least a part of the occupied time-frequency resources is used for transmitting the data signal.

It should be noted that at least some of the time-frequency resources may be one time-frequency resource, multiple time-frequency resources (not all of the time-frequency resources), or all of the time-frequency resources, and this is not limited in the embodiments of the present disclosure.

It should also be noted that at least part of the time-frequency resources occupied by the second type of pilot signal are used for transmitting data signals, and it can be understood that one or more or all of the time-frequency resources occupied by the first pilot signal are also time-frequency resources occupied by the data signal, that is, one or more or all of the time-frequency resources used by the second type of pilot signal are also used for transmitting the data signal, that is, one or more or all of the time-frequency resources used by the second type of pilot signal and the time-frequency resources used by the data signal may overlap. To simplify the description, at least part of the time-frequency resources may be referred to as shared time-frequency resources (shared REs). In the embodiment of the present disclosure, the second type of pilot signal may also be referred to as a "non-orthogonal pilot signal" or a "non-orthogonal DMRS".

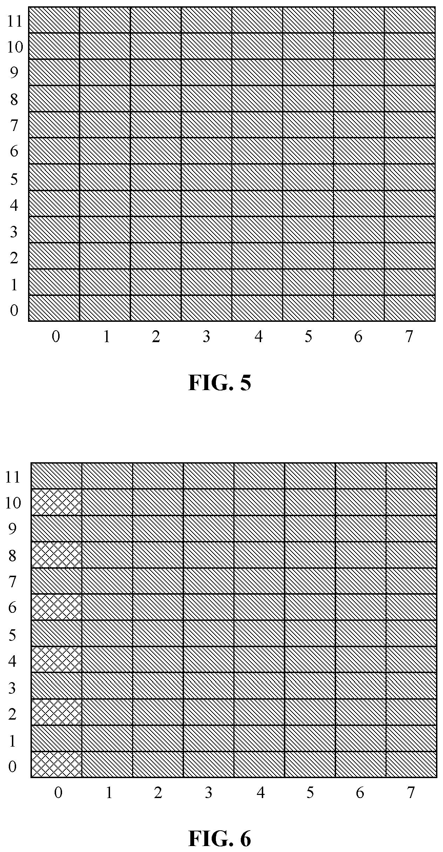

For example, taking PDSCH transmission as an example, it is assumed that 8 symbols scheduled by the network device in the time domain and 12 subcarriers in the frequency domain (i.e., 96 REs) are used for data signal transmission. As illustrated in FIG. 5, all REs can be used for transmission of the first pilot signal and the data signal. As illustrated in FIG. 6, REs corresponding to the 0th, 2nd, 4th, 6th, 8th, and 10th subcarriers on the 0th symbol may be used for transmission of the first pilot signal and the data signal, and other REs may be used for transmission of the data signal. The fact that the RE may be used for transmission of the first pilot signal and the data signal means that the RE may be used for transmission of both the first pilot signal and the data signal at the same time. Similar descriptions in subsequent sections all convey the same meaning.

It can be understood that different terminal devices have different signal processing capabilities, and thus types of pilot signals supported by different terminal devices are different. For example, the second type of pilot signal needs to be processed with a specific receiver (e.g., an iterative receiver, an AI/ML receiver) to demodulate the data because it uses time-frequency resources that can be used to transmit data signals. For a terminal device having an ordinary receiver, it may support a first type of pilot signal; for a terminal device having an iterative receiver or an AI/ML receiver, it can support both the first type of pilot signal and the second type of pilot signal.

It should be noted that the AI/ML receiver may adopt various methods, such as deep learning algorithms. It may be implemented using one or a combination of a fully connected network (FCN), a convolutional neural network (CNN), a recurrent neural network (RNN), and a transformer neural network architecture. The above receiver is merely an example, and the actual receiver may not be limited to the above example.

In an embodiment of the present disclosure, the terminal device may select a matched first pilot signal from multiple predetermined pilot signals according to a type of pilot signal supported by the terminal device. For example, if the terminal device supports the first type of pilot signal, the terminal device may select the first type of pilot signal as the first pilot signal from the multiple predetermined pilot signals. If the terminal device supports the second type of pilot signal, the terminal device may select the second type of pilot signal as the first pilot signal from the multiple predetermined pilot signals. If the terminal device supports both the first type of pilot signal and the second type of pilot signal, the terminal device may select either the first type of pilot signal or the second type of pilot signal as the first pilot signal from the multiple predetermined pilot signals.

In another possible implementation, the first pilot signal may be related to the speed of the terminal device. In other words, the first pilot signal may be determined based on the speed of the terminal device. Specifically, the terminal device may select, as the first pilot signal, an appropriate pilot signal from the multiple predetermined pilot signals according to the current moving speed.

For example, for a terminal device moving at a high speed, a pilot signal with more additional DMRSs may be selected as the first pilot signal to improve communication performance. For a terminal device moving at a low speed, a pilot signal with no additional DMRS or less additional DMRSs may be selected as the first pilot signal.

In yet another possible implementation, the first pilot signal may be related to a wireless channel environment between the terminal device and the network device. In other words, the first pilot signal may be determined based on a wireless channel environment between the terminal device and the network device. Specifically, the terminal device may select, as the first pilot signal, an appropriate pilot signal from the multiple predetermined pilot signals based on the wireless channel environment between the terminal device and the network device.

Exemplarily, the terminal device may measure a signal (e.g., a synchronization signal /PBCH block (SSB), a system message, etc.) from the network device, and estimate a wireless channel environment between the terminal device and the network device according to a signal measurement result (e.g., a reference signal received power (RSRP), a signal-to-interference-noise ratio (SINR), etc.). In this way, the terminal device can select the most matched pilot signal as the first pilot signal according to different wireless channel environments.

It should be noted that the terminal device may also determine the first pilot signal based on both the type of pilot signal supported by the terminal device and the speed of the terminal device. For example, for a terminal device that supports the first type of pilot signal and moves at a high speed, the first type of pilot signal configured with more additional DMRSs may be selected. For example, for a terminal device that supports the second type of pilot signal and moves at a high speed, it is possible to transmit the second type of pilot signal on part or all of the REs that transmit data. Alternatively, the terminal device may determine the first pilot signal based on both the type of pilot signal supported by the terminal device and the wireless channel environment between the terminal device and the network device. Alternatively, the terminal device may determine the first pilot signal according to both the speed of the terminal device and the wireless channel environment between the terminal device and the network device. Alternatively, the terminal device may determine the first pilot signal according to the type of pilot signal supported by the terminal device, the speed of the terminal device, and the wireless channel environment between the terminal device and the network device.

It can be understood that the first pilot signal indicated through the first information may be the first type of pilot signal or the second type of pilot signal.

When the first pilot signal is the first type of pilot signal, the network uses the orthogonal pilot signal in the related art for communication, avoids introducing a new pilot signal, thereby reducing system complexity. When the first pilot signal is the second type of pilot signal, the network may use the same time-frequency resource as the data signal for transmission, so that the data signal can use more time-frequency resources, and the transmission rate is improved, or the transmission reliability is improved.

In the embodiment of the present disclosure, the first information indicates the first pilot signal, which can be understood that the terminal device provides a suggestion to use the first pilot signal to the network device through the first information.

In one implementation, the network device may agree to use the first pilot signal according to the suggestion provided by the first information. In this way, the terminal device and the network device can communicate based on the first pilot signal.

In another implementation, the network device may override the suggestion provided by the terminal device in the first information or modify the suggestion provided in the first information, for example, the network device may self-select a pilot signal (e.g., a second pilot signal) based on the first pilot signal recommended by the terminal device and other considerations (e.g., joint scheduling with other terminal devices, coexistence, etc.), and indicate the second pilot signal to the terminal device, so that the terminal device and the network device can communicate based on the second pilot signal.

The second pilot signal is different from the first pilot signal in some parameters or all parameters.

By this method, the terminal device may indicate the selected first pilot signal to the network device through the first information. In this way, the network device can determine a pilot signal (such as the first pilot signal or the second pilot signal) suitable for the terminal device based on the first information, so as to communicate with the terminal device according to the pilot signal and improve transmission performance.

In an embodiment of the present disclosure, the first pilot signal may be used for one or more of the following channels:
a downlink data channel;
a downlink control channel;
an uplink data channel; or
an uplink control channel.

It will be appreciated that the first pilot signal may be a pilot signal used in at least one of a downlink data channel, a downlink control channel, an uplink data channel, or an uplink control channel. Here, the downlink data channel, the downlink control channel, the uplink data channel, and the uplink control channel may be channels transmitted between the terminal device and the network device after transmitting the first information.

For example, the first pilot signal may be a DMRS for subsequent downlink control channel transmission (for example, a DMRS in a PDCCH), or may be a DMRS for subsequent downlink data channel transmission (for example, a DMRS in a PDSCH), or may be a DMRS for subsequent downlink data channel transmission and a DMRS for subsequent downlink control channel transmission (for example, a DMRS in a PDSCH and a DMRS in a PDCCH). Here, "subsequent" refers to a partial transmission or all transmission at some later time or after some time. The "subsequent" in other examples is similar.

Exemplarily, the first pilot signal may be a DMRS for subsequent uplink control channel transmission (e.g., a DMRS in a PUCCH), or may be a DMRS for subsequent uplink data channel transmission (e.g., a DMRS in a PUSCH), or may be a DMRS for subsequent uplink data channel transmission and a DMRS for subsequent uplink control channel transmission (e.g., a DMRS in a PUSCH and a DMRS in a PUCCH)

For example, the first pilot signal may be a DMRS for subsequent downlink and uplink control channel transmissions (for example, a DMRS in a PDCCH and a DMRS in a PUCCH), or may be a DMRS for subsequent downlink and uplink data channel transmissions (for example, a DMRS in a PDSCH and a DMRS in a PUSCH), or may be a DMRS for subsequent downlink and uplink data channel transmissions and a DMRS for subsequent downlink and uplink control channel transmissions (for example, a DMRS in a PDSCH, a DMRS in a PUSCH, a DMRS in a PDCCH and a DMRS in a PUCCH).

It should be noted that which channel or channels the first pilot signal is specific to may be determined by a predetermined rule, or may be indicated by signaling between a terminal device and a network device, and this is not limited in the embodiment of the present disclosure.

Exemplarily, the terminal device may indicate to the network device a channel for which the first pilot signal is specifically used through the first information. That is, when the terminal device indicates the first pilot signal to the network device, the terminal device may simultaneously indicate the channel for which the first pilot signal is specifically used. For example, the first information may include one or more indication fields, and different values in the indication fields indicate which channel or channels the first pilot signal is specifically directed to.

Exemplarily, the network device may indicate to the terminal device, through the seventh information, a channel for which the first pilot signal is specifically used. That is, the channel for which the first pilot signal is specifically used may also be indicated to the terminal device by the network device. For example, the seventh information may include one or more indication fields, and different values in the indication fields indicate which channel or channels the first pilot signal is specifically directed to.

By this method, the first pilot signal can be indicated for different channels, so that different channels can be distinguished, an optimal pilot signal can be selected for each channel, and the performance of each channel can be improved.

In an embodiment of the present disclosure, the first information indicates the first pilot signal in various ways. Hereinafter, three indication manners will be described with reference to manner #A to manner #C.

Manner #A: the first information is transmitted through a first random access signal. The first random access signal and the pilot signal are associated with each other. The first pilot signal is a pilot signal associated with the first random access signal.

It should be noted that multiple sets of random access signals may be agreed upon between the terminal device and the network device, and different sets of random access signals may be associated with different pilot signals. Thus, after determining the first pilot signal, the terminal device may transmit, to the network device, a first random access signal from a set of random access signals that are associated with the first pilot signal, and implicitly indicate the first pilot signal through the first random access signal.

It should be noted that each set of random access signals in the multiple sets of random access signals may include one or more random access signals. The term "set" herein is used to describe one or more random access signals that have the same function or purpose, and it is not necessary to explicitly configure a set. For example, one or more random access signals associated with the same pilot signal are referred to as a set of random access signals, and if the one or more random access signals are configured, then we simply refer to configuring a set of random access signals, but it does not mean that a "set" is defined in the configuration signaling. For convenience of description, "a set of random access signals" is sometimes referred to as "a random access signal set", "multiple sets of random access signals" is referred to as "multiple random access signal sets", and "each set of random access signals" is referred to as "each random access signal set", and other similar descriptions are not listed one by one.

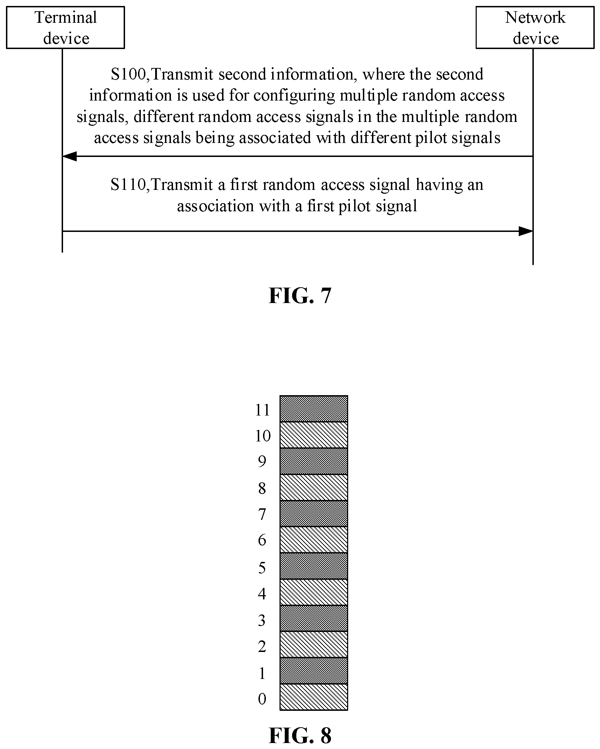

In some embodiments, referring to a second flowchart of a method for communication illustrated in FIG. 7, before a terminal device transmits first information at S110, the method for communication provided by the embodiment of the present disclosure further includes the following operations.

At S100: a network device transmits second information to the terminal device; and accordingly, the terminal device receives the second information transmitted by the network device.

The second information is used to configure multiple sets of random access signals. Different sets of random access signals in the multiple sets of random access signals are associated with different pilot signals. The first random access signal is any one of a set of random access signals associated with the first pilot signal in the multiple sets of random access signals.

It can be understood that the network device may agree with the terminal device multiple different sets of random access signals through the second information.

It should be noted that the second information does not necessarily explicitly define or indicate a "set", and the "set" herein is used to describe one or more random access signals having the same purpose or function, similar to the previous description.

In some embodiments, the second information may be carried through one or more of the following signaling:
a broadcast message;
a system message;
a dedicated signaling; or,
a RRC signaling.

For example, the broadcast message may be a master information block (MIB) message, a synchronization signal/PBCH block (SSB), or the like, and the embodiments of the present disclosure are not limited.

Exemplarily, the system message may be a system information block (SIB), such as SIB1, SIB2, etc., which is not limited in the embodiment of the present disclosure.

Exemplarily, the dedicated signaling may be signaling dedicated to a specific function, such as signaling dedicated to configuring an artificial intelligence (AI)/machine learning (ML) model, and the like, and the embodiments of the present disclosure do not limit this.

Exemplarily, the second information may also be carried through RRC signaling in dual connectivity and/or carrier aggregation (CA) scenarios.

In one possible implementation, the second information may be carried through a signaling. For example, the second information may be carried through the MIB; for another example, the second information is carried through RRC signaling; for another example, the second information is carried through SIB1.

In another possible implementation, the second information may also be carried through multiple signaling. Multiple signaling may be of the same type. For example, the second information may be carried through the multiple MIBs, that is, different information in the second information may be carried through different MIBs. In addition, the multiple signaling may be of different types. The second information may be carried through a MIB and a SIB1, that is, part of the second information is carried through the MIB, and the other part of the second information is carried through the SIB1.

The multiple sets of random access signals configured through the second information may include two or more sets of random access signals.

It should also be noted that the network device configures two or more sets of random access signals for the terminal device in advance through the second information, and it can be understood that the network device indicates configurations of two or more different sets of random access signals to the terminal device through the second information.

In an example, the network device indicating the configurations of two or more sets of random access signals may refer to that the network device indicates configurations of two or more different sets of random access signals for each of one or more synchronization signals. It can be understood that in a communication system, each synchronization signal (for example, a SSB in 5G) has a corresponding random access signal configuration. Taking a synchronization signal A as an example, its corresponding random access signal is A_RACH. In the embodiment of the present disclosure, two different sets of random access signals may be configured for the synchronization signal A, which are denoted as RACH_Set1 and RACH_Set2. That is, RACH signals corresponding to the RACH_Set1 and RACH signals corresponding to the RACH_Set2 both belong to A_RACH, that is, they are both associated with the synchronization signal A. Further, the random access signal sets RACH_Set1 and RACH_Set2 may be associated with two different DMRSs, respectively.

In another example, the network device indicating the configurations of two or more sets of random access signals, which may mean that the network device indicates different sets of random access signals for two or more synchronization signals, respectively. Taking two synchronization signals as an example (denoted as A and B), the network device may indicate a set of random access signals RACH_SetA for synchronization signal A and a set of random access signals RACH_SetA for synchronization signal B. These two different sets of random access signals correspond to different DMRSs respectively.

The random access signal may include an random access channel (RACH) preamble, and the RACH preamble may also be referred to as an RA preamble.

In some embodiments, different sets of random access signals maintain different configurations on one or more of the following parameters:
a signal sequence;
a signal root sequence;
a parameter used to generate the signal sequence;
a time domain resource;
a frequency domain resource;
a RACH occasion;
a preamble; or,
a preamble format.

It can be understood that the network device configures different sets of random access signals by configuring different parameters. Random access signal sets of different configurations may be associated with different pilot signals. Exemplarily, two different RACH occasions may respectively correspond to different pilot signals.

It should be noted that configuration parameters related to pilot signals respectively associated with the multiple sets of random access signals configured in the second information may be predetermined or may be indicated by the network device.

In some embodiments, the network device may indicate, through the second information, related configuration parameters of pilot signals associated with the multiple of sets of random access signals respectively.

In some embodiments, taking a first pilot signal associated with a first random access signal as an example, the second information may indicate one or more of the following parameters of the first pilot signal; alternatively, one or more of the following parameters of the first pilot signal are predefined:
a type of the first pilot signal;
a power parameter of the first pilot signal;
a frequency domain location of a time-frequency resource occupied by the first pilot signal;
a time domain location of the time-frequency resource occupied by the first pilot signal; a sequence generation method for the first pilot signal; or,
a sequence generation parameter of the first pilot signal.

It can be understood that the type of the first pilot signal may be either the first type of pilot signal or the second type of pilot signal described above. Time-frequency resources occupied by the first type of pilot signal are not used for transmitting a data signal, and at least part of time-frequency resources occupied by the second type of pilot signal are used for transmitting a data signal.

It should be noted that the first type of pilot signal and the second type of pilot signal can be understood with reference to the description in the above-described embodiments, and will not be repeatedly described here for the sake of brevity.

The parameters related to the first pilot signal will be described in detail below. (1) Power parameter of the first pilot signal.

It should be noted that "power" mentioned in the embodiments of the present disclosure may be directly extended to "energy".

By this method, when the power parameter of the first pilot signal is indicated by the network device, power allocation of the first pilot signal can be flexibly indicated, so that the system can optimize the transmission power of the first pilot signal according to the wireless environment, thereby improving the system performance. In a case where the power parameter of the first pilot signal is predetermined, signaling overhead can be saved.

In some embodiments, when the first pilot signal is a second type of pilot signal, the power parameter of the first pilot signal includes one or more of the following:
a ratio of a power of the first pilot signal transmitted on a first time-frequency resource to a total power on a second time-frequency resource;
a ratio of a power of a data signal transmitted on the first time-frequency resource to the total power on the second time-frequency resource;
a ratio of the power of the first pilot signal transmitted on the first time-frequency resource to the power of the data signal transmitted on the first time-frequency resource; or,
a ratio of the power of the data signal transmitted on the first time-frequency resource to the power of the first pilot signal transmitted on the first time-frequency resource.

The first time-frequency resource is any one of the at least part of the time-frequency resources, and the second time-frequency resource is a scheduled time-frequency resource.

In one possible implementation, the power parameter of the first pilot signal may be the ratio of the power of the first pilot signal transmitted on the first time-frequency resource to the total power on the second time-frequency resource.

The first time-frequency resource may be any one of the at least part of the time-frequency resources.

It should be noted that when the first time-frequency resource is any one of the at least part of the time-frequency resources, the first time-frequency resource may be considered to be a shared time-frequency resource.

The total power on the second time-frequency resource may be a sum of a power of the first pilot signal transmitted on the second time-frequency resource and a power of the data signal transmitted on the second time-frequency resource.

It should also be noted that the second time-frequency resource may be any one of the at least part of the time-frequency resources, and at this time, the second time-frequency resource may be considered to be a shared time-frequency resource. The second time-frequency resource may not be any one of the at least part of the time-frequency resources, or the second time-frequency resource may be any one of other time-frequency resources other than the at least part of the time-frequency resources, and at this time, it may be considered that the second time-frequency resource is not a shared time-frequency resource.

In some embodiments, the second time-frequency resource may be any one of the at least part of the time-frequency resources.

Further, when the second time-frequency resource is any one of the at least part of the time-frequency resources, the second time-frequency resource and the first time-frequency resource may be the same time-frequency resource or may not be the same time-frequency resource, and the embodiment of the present disclosure does not limit this.

In other embodiments, the second time-frequency resource may not be any one of the at least part of the time-frequency resources, or the second time-frequency resource may be any one of other time-frequency resources other than the at least part of the time-frequency resources.

Exemplarily, when a value of the ratio is a linear value, candidate values of the ratio value may be one or more of the following values: {0.01, 0.02, 0.03, 0.04, 0.05, 0.06, 0.07, 0.08, 0.09, 0.10, 0.15, 0.20, 0.25, 0.3, 0.35, 0.4, 0.45, 0.5, 0.55, 0.6, 0.65, 0.7, 0.75, 0.8, 0.85, 0.9}.

Exemplarily, when a value of the ratio is a dB value, candidate values of the ratio value may be one or more of the following values: {-1 dB, -2 dB, -3 dB, -4 dB, -5 dB, -6 dB, -7 dB, -8 dB, -9 dB, -10 dB, -11 dB, -12 dB, -13 dB, -14 dB, -15 dB, -16 dB, -17 dB, -18 dB, -19 dB, -20 dB}.

The power parameter of the first pilot signal may be the ratio of the total power on the second time-frequency resource to the power of the first pilot signal transmitted on the first time-frequency resource.

Further, with respect to a case that the power parameter of the first pilot signal is the ratio of the total power on the second time-frequency resource to the power of the first pilot signal transmitted on the first time-frequency resource, and a case that the power parameter of the first pilot signal is the ratio of the power of the first pilot signal transmitted on the first time-frequency resource to the total power on the second time-frequency resource: when values of the two ratios are linear values, candidate values of the two ratio values are reciprocals of each other; when values of the two ratios are dB values, candidate values of the two ratio values are opposites of each other.

It should be noted that when the ratio value is a linear value and the power parameter of the first pilot signal is indicated through the second information, the indication of the second information can be simplified.

In a case where the ratio value is a dB value and the power parameter of the first pilot signal is indicated through the second information, the second information can indicate a finer power difference.

According to this method, when the power parameter of the first pilot signal is indicated through the first information, the second information can directly indicate the proportion of the total power (for example, the second information indicates the ratio of the power of the first pilot signal transmitted on the first time-frequency resource to the total power on the second time-frequency resource), thereby simplifying the calculation of the power parameter of the first pilot signal. In a case where the power parameter of the first pilot signal is predetermined, signaling overhead can be saved.

In another possible implementation, the power parameter of the first pilot signal may be the ratio of the power of the data signal transmitted on the first time-frequency resource to the total power on the second time-frequency resource.

The first time-frequency resource is any one of the at least part of the time-frequency resources.

When the first time-frequency resource is any one of the at least part of the time-frequency resources, the first time-frequency resource may be considered to be a shared time-frequency resource.

The total power on the second time-frequency resource may be a sum of the power of the first pilot signal transmitted on the second time-frequency resource and the power of the data signal transmitted on the second time-frequency resource.

The second time-frequency resource may be any one of the at least part of the time-frequency resources, and at this time, the second time-frequency resource may be considered to be a shared time-frequency resource. The second time-frequency resource may not be any one of the at least part of the time-frequency resources, or the second time-frequency resource may be any one of other time-frequency resources other than the at least part of the time-frequency resources, and at this time, it may be considered that the second time-frequency resource is not a shared time-frequency resource.

In some embodiments, the second time-frequency resource may be any one of the at least part of the time-frequency resources.

Further, when the second time-frequency resource is any one of the at least part of the time-frequency resources, the second time-frequency resource and the first time-frequency resource may be the same time-frequency resource or may not be the same time-frequency resource, and the embodiment of the present disclosure does not limit this.

In other embodiments, the second time-frequency resource may not be any one of the at least part of the time-frequency resources, or the second time-frequency resource may be any one of other time-frequency resources other than the at least part of the time-frequency resources.

It should also be noted that, in a case where a value of the ratio is a linear value or a dB value, candidate values of the ratio value can be understood with reference to the description in the foregoing embodiment, and will not be repeated here for the sake of brevity.

The power parameter of the first pilot signal may be the ratio of the total power on the second time-frequency resource to the power of the data signal transmitted on the first time-frequency resource.

Further, for a case that the power parameter of the first pilot signal is the ratio of the total power on the second time-frequency resource to the power of the data signal transmitted on the first time-frequency resource, and a case that the power parameter of the first pilot signal is the ratio of the power of the data signal transmitted on the first time-frequency resource to the total power on the second time-frequency resource: when values of the two ratios are linear values, candidate values of the two ratio values are reciprocals of each other; when values of the two ratios are dB values, candidate values of the two ratio values are opposites of each other.

In a case where a value of the ratio is a linear value and the power parameter of the first pilot signal is indicated through the second information, the indication of the second information can be simplified.

In a case where a value of the ratio is a dB value and the power parameter of the first pilot signal is indicated through the second information, the second information can indicate a finer power difference.

According to this method, when the power parameter of the first pilot signal is indicated through the second information, the second information can directly indicate the proportion of the total power, thereby simplifying the calculation of the power parameter of the first pilot signal; in a case where the power parameter of the first pilot signal is predetermined, signaling overhead can be saved.

In another possible implementation, the power parameter of the first pilot signal may be the ratio of a power of the first pilot signal transmitted on the first time-frequency resource to a power of the data signal transmitted on the first time-frequency resource.

The first time-frequency resource is any one of the at least part of the time-frequency resources.

When the first time-frequency resource is any one of the at least part of the time-frequency resources, the first time-frequency resource may be considered to be a shared time-frequency resource.

It should also be noted that, in a case where a value of the ratio is a linear value or a dB value, candidate values of the ratio value can be understood with reference to the description in the foregoing embodiment, and will not be repeated here for the sake of brevity.

When a value of the ratio is a linear value and the power parameter of the first pilot signal is indicated through the second information, the indication of the second information can be simplified.

In a case where a value of the ratio is a dB value and the power parameter of the first pilot signal is indicated through the second information, the second information can indicate a finer power difference.

According to the method, when the power parameter of the first pilot signal is indicated through the second information, compared with the second information directly indicating the proportion of the total power, the second information indicates the ratio of the power of the first pilot signal transmitted on the first time-frequency resource to the power of the data signal transmitted on the first time-frequency resource, which can make a dynamic value range of the power parameter of the first pilot signal smaller, thereby improving the granularity of the indication and reducing the overhead of the indication. In a case where the power parameter of the first pilot signal is predetermined, signaling overhead can be saved.

In another possible implementation, the power parameter of the first pilot signal may be the ratio of the power of the data signal transmitted on the first time-frequency resource to the power of the first pilot signal transmitted on the first time-frequency resource.

The first time-frequency resource is any one of the at least part of the time-frequency resources.

When the first time-frequency resource is any one of the at least part of the time-frequency resources, the first time-frequency resource may be considered to be a shared time-frequency resource.

It should also be noted that, in a case where a value of the ratio is a linear value and a dB value, candidate values of the ratio value can be understood with reference to the description in the foregoing embodiment, and will not be repeated here for the sake of brevity.

Further, for a cast that the power parameter of the first pilot signal is the ratio of the power of the data signal transmitted on the first time-frequency resource to the power of the first pilot signal transmitted on the first time-frequency resource, and a cast that the power parameter of the first pilot signal is the ratio of the power of the first pilot signal transmitted on the first time-frequency resource to the power of the data signal transmitted on the first time-frequency resource: when values of the two ratios are linear values, candidate values of the two ratio values are reciprocals of each other; when values of the two ratios are dB values, candidate values of the two ratio values are opposites of each other.

When a value of the ratio is a linear value and the power parameter of the first pilot signal is indicated through the second information, the indication of the second information can be simplified.

In a case where a value of the ratio is a dB value and the power parameter of the first pilot signal is indicated through the second information, the second information can indicate a finer power difference.

According to the method, when the power parameter of the first pilot signal is indicated through the second information, compared with the second information directly indicating the proportion of the total power, the second information indicates the ratio of the power of the data signal transmitted on the first time-frequency resource to the power of the first pilot signal transmitted on the first time-frequency resource, which can make a dynamic value range of the power parameter of the first pilot signal smaller, thereby improving the granularity of the indication and reducing the overhead of the indication. In a case where the power parameter of the first pilot signal is predetermined, signaling overhead can be saved.

### (2) Frequency domain location of the time-frequency resource occupied by the first pilot signal.

Through this method, the frequency domain location of the time-frequency resource occupied by the first pilot signal can be flexibly changed, which can be more conducive to multi-user multiplexing and reduce pilot signal interference among multi-users.

In the embodiment of the present disclosure, the frequency domain location of the time-frequency resource occupied by the first pilot signal may be implemented in the following possible ways.

In one possible implementation, the second information may indicate a frequency domain density of the time-frequency resources occupied by the first pilot signal; alternatively, the frequency domain density of the time-frequency resource occupied by the first pilot signal may be predetermined. The frequency domain location of the time-frequency resource occupied by the first pilot signal may be determined according to the frequency domain density of the time-frequency resource occupied by the first pilot signal.

In an embodiment of the present disclosure, the frequency domain density of the time-frequency resource occupied by the first pilot signal may include: an RE density of the time-frequency resource occupied by the first pilot signal; and/or, an RB density of the time-frequency resource occupied by the first pilot signal.

When the frequency domain density of the time-frequency resource occupied by the first pilot signal is the RE density of the time-frequency resource occupied by the first pilot signal, the RE density of the time-frequency resource occupied by the first pilot signal may be a RE density of the time-frequency resource occupied by the first pilot signal within a range of one RB. The RE density of the time-frequency resource occupied by the first pilot signal within the range of one RB may be a first value, and the first value has a mapping relationship with a number of REs of the time-frequency resource occupied by the first pilot signal within the range of one RB.

Further, the first value has a one-to-one mapping relationship with the number of REs of the time-frequency resource occupied by the first pilot signal within the range of one RB.

In some embodiments, when the first value is less than or equal to 1, the number of REs of the time-frequency resource occupied by the first pilot signal within the range of one RB is a product of the first value and a total number of REs within the range of the RB.

For example, assuming that there are 12 REs (corresponding to 12 subcarriers) within a range of one RB, and the RE density of the time-frequency resource occupied by the first pilot signal within the range of the RB is 1/2 (that is, the first value is 1/2), it can be obtained that the number of REs of the time-frequency resource occupied by the first pilot signal within the range of the RB is 12 * 1/2 = 6.

For example, assuming that there are 12 REs (corresponding to 12 subcarriers) within a range of one RB, and the RE density of the time-frequency resource occupied by the first pilot signal within the range of the RB is 1 (that is, the first value is 1), it can be obtained that the number of REs of the time-frequency resources occupied by the first pilot signal within the range of the RB is 12.

In other embodiments, when the first value is greater than 1, the number of REs of the time-frequency resource occupied by the first pilot signal within a range of one RB is equal to the first value.

For example, assuming that there are 12 REs (corresponding to 12 subcarriers) within a range of one RB, and the RE density of the time-frequency resource occupied by the first pilot signal within the range of the RB is 6 (that is, the first value is 6), it can be obtained that the number of REs of the time-frequency resource occupied by the first pilot signal within the range of the RB is 6.

According to this method, when the frequency domain density of the time-frequency resource occupied by the first pilot signal is the RE density of the time-frequency resource occupied by the first pilot signal, the RE density of the time-frequency resource occupied by the first pilot signal can be flexibly changed according to the wireless environment, so that the wireless channel can be better matched and the system performance can be improved.

When the frequency domain density of the time-frequency resource occupied by the first pilot signal is the RB density of the time-frequency resource occupied by the first pilot signal, the RB density of the time-frequency resource occupied by the first pilot signal may be a second value. Assuming that one RB out of every X RBs is used for transmitting the first pilot signal, there is a mapping relationship between the second value and a value of X, where X is a positive integer.

Further, there is a one-to-one mapping relationship between the second value and the value of X.

In some embodiments, when the second value is less than or equal to 1, the value of X is the reciprocal of the second value.

For example, assuming that the RB density of time-frequency resources occupied by the first pilot signal is 0.5 (that is, the second value is 0.5), the value of X is 1/0.5 = 2, that is, one RB out of every two RBs is used for transmitting the first pilot signal.

For example, assuming that the RB density of the time-frequency resource occupied by the first pilot signal is 1 (that is, the second value is 1), the value of X is 1, that is, each RB is used for transmitting the first pilot signal.

In other embodiments, when the second value is greater than 1, the value of X is equal to the second value.

For example, assuming that the RB density of the time-frequency resource occupied by the first pilot signal is 2 (that is, the second value is 2), the value of X is 2, that is, one RB out of every two RBs is used for transmitting the first pilot signal.

It is noted that at least part of REs in one RB of the time-frequency resource occupied by the first pilot signal are used for transmitting the first pilot signal.

Further, the at least part of the REs may be one RE in one RB, multiple REs in one RB (not all of the REs in one RB), or all of the REs in one RB, and this is not limited in the embodiment of the present disclosure.

According to this method, when the frequency domain density of the time-frequency resource occupied by the first pilot signal is the RB density of the time-frequency resource occupied by the first pilot signal, the RB density of the time-frequency resource occupied by the first pilot signal can be changed with greater granularity according to the wireless environment. This method provides better flexibility and is more conducive to multi-user multiplexing, thereby reducing pilot signal interference among the multiple users.

In another possible implementation, the second information may indicate a frequency domain offset value of a time-frequency resource occupied by the first pilot signal; alternatively, the frequency domain offset value of the time-frequency resource occupied by the first pilot signal is predetermined. The frequency domain location of the time-frequency resource occupied by the first pilot signal may be determined according to the frequency domain offset value of the time-frequency resource occupied by the first pilot signal.

In an embodiment of the present disclosure, the frequency domain offset value of the time-frequency resource occupied by the first pilot signal may include: an RE offset value of the time-frequency resource occupied by the first pilot signal; and/or, an RB offset value of the time-frequency resource occupied by the first pilot signal.

In a case where the frequency domain offset value of the time-frequency resource occupied by the first pilot signal is the RE offset value of the time-frequency resource occupied by the first pilot signal, REs of the time-frequency resource occupied by the first pilot signal within a range of one RB can be obtained according to the RE offset value of the time-frequency resource occupied by the first pilot signal and a number of REs of the time-frequency resource occupied by the first pilot signal within the range of the RB.

For example, assuming that there are 12 REs (corresponding to 12 subcarriers) within a range of one RB, the RE offset value of the time-frequency resource occupied by the first pilot signal is offset_RE, and the number of REs of the time-frequency resource occupied by the first pilot signal within the range of the RB is Y, then identifiers (or locations, similar elsewhere, will not be repeated) of the REs of the time-frequency resource occupied by the first pilot signal within the range of the RB are: offset_RE, offset_RE + 12/Y, offset_RE + 2 * 12/Y, offset_RE + 3 * 12/Y, respectively, where Y is a positive integer.

According to this method, when the frequency domain offset value of the time-frequency resource occupied by the first pilot signal is the RE offset value of the time-frequency resource occupied by the first pilot signal, RE (or subcarrier) allocation of the time-frequency resource occupied by the first pilot signal can be flexibly changed, this is more conducive to multi-user multiplexing, thereby reducing pilot signal interference among multiple users.

When the frequency domain offset value of the time-frequency resource occupied by the first pilot signal is the RB offset value of the time-frequency resource occupied by the first pilot signal, RBs of the time-frequency resource occupied by the first pilot signal can be obtained according to the RB offset value of the time-frequency resource occupied by the first pilot signal and the value of X (one RB out of every X RBs is used for transmitting the first pilot signal).

For example, assuming that the RB offset value of the time-frequency resource occupied by the first pilot signal is offset_RB, identifiers (or locations) of the RBs of the time-frequency resource occupied by the first pilot signal are: offset_RB, offset_RB + X, offset_RB + 2 * X, and offset_RB + 3 * X, respectively.

According to this method, when the frequency domain offset value of the time-frequency resource occupied by the first pilot signal is the RB offset value of the time-frequency resource occupied by the first pilot signal, RB allocation of the time-frequency resource occupied by the first pilot signal can be flexibly changed, this is more conducive to multi-user multiplexing, thereby reducing pilot signal interference among multiple users.

In another possible implementation, the second information may indicate a frequency domain pattern of a time-frequency resource occupied by the first pilot signal; alternatively, the frequency domain pattern of the time-frequency resource occupied by the first pilot signal is predetermined. The frequency domain location of the time-frequency resource occupied by the first pilot signal may be determined according to the frequency domain pattern of the time-frequency resource occupied by the first pilot signal.

In an embodiment of the present disclosure, the frequency domain pattern of the time-frequency resource occupied by the first pilot signal may include: an RE pattern of the time-frequency resource occupied by the first pilot signal; and/or, an RB pattern of the time-frequency resource occupied by the first pilot signal.

When the frequency domain pattern of the time-frequency resource occupied by the first pilot signal is an RE pattern of the time-frequency resource occupied by the first pilot signal, the RE pattern may be determined by predetermination and/or according to a configuration from a network device. The RE pattern may identify the time-frequency resource occupied by the first pilot signal.

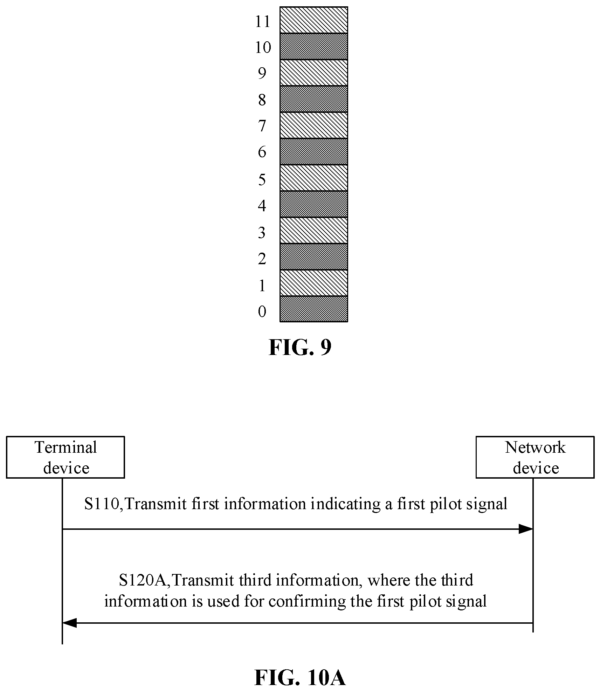

For example, FIGS. 8 and 9 illustrate RE patterns determined by predetermination and/or according to the configuration from the network device, and the RE pattern of the time-frequency resource occupied by the first pilot signal may be one of the RE pattern shown in FIG. 8 and the RE pattern shown in FIG. 9.

For example, assuming that the RE pattern of the time-frequency resource occupied by the first pilot signal is the RE pattern illustrated in FIG. 8, identifiers of REs of the time-frequency resource occupied by the first pilot signal within a range of one RB are 0, 2, 4, 6, 8, and 10, respectively.

For example, assuming that the RE pattern of the time-frequency resource occupied by the first pilot signal is the RE pattern shown in FIG. 9, identifiers of REs of the time-frequency resource occupied by the first pilot signal within a range of one RB are: 1, 3, 5, 7, 9, and 11, respectively.

The RE pattern of the time-frequency resource occupied by the first pilot signal may be determined according to the indication of the second information to be the RE pattern illustrated in FIG. 8 or the RE pattern illustrated in FIG. 9. Alternatively, it may be specified in advance that the RE pattern of the time-frequency resource occupied by the first pilot signal is the RE pattern shown in FIG. 8 or the RE pattern shown in FIG. 9. In this case, when the second information indicates the first pilot signal, the RE pattern of the time-frequency resource occupied by the first pilot signal may be implicitly indicated.

It should be noted that the examples shown in FIGS. 8 and 9 all take one symbol as an example, and it should be understood that the examples shown on the basis of FIGS. 8 and 9 can also be directly extended to multiple symbols, and the embodiments of the present disclosure will not be described in detail.

According to this method, when the frequency domain pattern of the time-frequency resource occupied by the first pilot signal is the RE pattern of the time-frequency resource occupied by the first pilot signal, RE (or subcarrier) allocation of the time-frequency resource occupied by the first pilot signal can be flexibly changed, which can be more conducive to multi-user multiplexing, thereby reducing pilot signal interference between multiple users. Further, the RE pattern of the time-frequency resource occupied by the first pilot signal may be determined by predetermination and/or according to the configuration from the network device, so that signaling overhead may be reduced.

When the frequency domain pattern of the time-frequency resource occupied by the first pilot signal is an RB pattern of the time-frequency resource occupied by the first pilot signal, the RB pattern may be determined by predetermination and/or according to a configuration from the network device. The RB pattern may identify the time-frequency resource occupied by the first pilot signal.

It should also be noted that the exemplary description of the RB pattern of the time-frequency resource occupied by the first pilot signal can be understood with reference to the description in the foregoing embodiments, and for the sake of brevity, the description will not be repeated here.

According to this method, when the frequency domain pattern of the time-frequency resource occupied by the first pilot signal is the RB pattern of the time-frequency resource occupied by the first pilot signal, RB allocation of the time-frequency resource occupied by the first pilot signal can be flexibly changed, which can be more conducive to multi-user multiplexing and reduce pilot signal interference among multiple users. In addition, the RB pattern of the time-frequency resource occupied by the first pilot signal may be determined by predetermination and/or network device configuration, so that signaling overhead may be reduced.

Based on the above several possible implementations, the frequency domain location of the time-frequency resource occupied by the first pilot signal may be determined according to one or more of the following parameters indicated through the second information:
a frequency domain density of a time-frequency resource occupied by the first pilot signal;
a frequency domain offset value of the time-frequency resource occupied by the first pilot signal; or,
a frequency domain pattern of the time-frequency resource occupied by the first pilot signal.

Exemplarily, the frequency domain location of the time-frequency resource occupied by the first pilot signal may be determined according to the frequency domain density of the time-frequency resource occupied by the first pilot signal. For example, the frequency domain location of the time-frequency resource occupied by the first pilot signal may be determined according to the RE density of the time-frequency resource occupied by the first pilot signal, and at this time, an RE offset value of the time-frequency resource occupied by the first pilot signal may be determined by predetermination and/or according to a configuration from a network device; and/or, the frequency domain location of the time-frequency resource occupied by the first pilot signal may be determined according to the RB density of the time-frequency resource occupied by the first pilot signal, and at this time, an RB offset value of the time-frequency resource occupied by the first pilot signal may be determined by predetermination and/or according to a configuration from the network device.

Exemplarily, the frequency domain location of the time-frequency resource occupied by the first pilot signal may be determined according to the frequency domain offset value of the time-frequency resource occupied by the first pilot signal. For example, the frequency domain location of the time-frequency resource occupied by the first pilot signal may be determined according to an RE offset value of the time-frequency resource occupied by the first pilot signal, and at this time, an RE density of the time-frequency resource occupied by the first pilot signal may be determined by predetermination and/or a configuration from the network device; and/or, the frequency domain location of the time-frequency resource occupied by the first pilot signal may be determined according to an RB offset value of the time-frequency resource occupied by the first pilot signal, and at this time, an RB density of the time-frequency resource occupied by the first pilot signal may be determined by predetermination and/or according to a configuration from the network device.

Exemplarily, the frequency domain location of the time-frequency resource occupied by the first pilot signal may be determined according to the frequency domain pattern of the time-frequency resource occupied by the first pilot signal. For example, the frequency domain location of the time-frequency resource occupied by the first pilot signal may be determined according to the RE pattern of the time-frequency resource occupied by the first pilot signal; and/or the frequency domain location of the time-frequency resource occupied by the first pilot signal may be determined according to the RB pattern of the time-frequency resource occupied by the first pilot signal.

For example, the frequency domain location of the time-frequency resource occupied by the first pilot signal may be determined according to the frequency domain density and the frequency domain offset value of the time-frequency resource occupied by the first pilot signal. For example, the frequency domain location of the time-frequency resource occupied by the first pilot signal may be determined according to the RE density and/or the RB density of the time-frequency resource occupied by the first pilot signal, and the RE offset value and/or the RB offset value of the time-frequency resource occupied by the first pilot signal.

Exemplarily, the frequency domain location of the time-frequency resource occupied by the first pilot signal may be determined according to the frequency domain density and the frequency domain pattern of the time-frequency resource occupied by the first pilot signal. For example, the frequency domain location of the time-frequency resource occupied by the first pilot signal may be determined according to the RE density and/or the RB density of the time-frequency resource occupied by the first pilot signal, and the RE pattern and/or the RB pattern of the time-frequency resource occupied by the first pilot signal.

Exemplarily, the frequency domain location of the time-frequency resource occupied by the first pilot signal may be determined according to the frequency domain offset value and the frequency domain pattern of the time-frequency resource occupied by the first pilot signal. For example, the frequency domain location of the time-frequency resource occupied by the first pilot signal may be determined according to the RE offset value and/or the RB offset value of the time-frequency resource occupied by the first pilot signal, and the RE pattern and/or the RB pattern of the time-frequency resource occupied by the first pilot signal.

Exemplarily, the frequency domain location of the time-frequency resource occupied by the first pilot signal may be determined according to the frequency domain density, the frequency domain offset value, and the frequency domain pattern of the time-frequency resource occupied by the first pilot signal. For example, the frequency domain location of the time-frequency resource occupied by the first pilot signal may be determined according to the RE density and/or the RB density of the time-frequency resource occupied by the first pilot signal, the RE offset value and/or the RB offset value of the time-frequency resource occupied by the first pilot signal, and the RE pattern and/or the RB pattern of the time-frequency resource occupied by the first pilot signal.

In the embodiment of the present disclosure, when the frequency domain location of the time-frequency resource occupied by the first pilot signal is indicated through the second information, there are two possible implementations as follows.

In one possible implementation, the second information may indicate the frequency domain location of the time-frequency resource occupied by the first pilot signal through a first bitmap.

Exemplarily, the second information may indicate, through the first bitmap, an RB used to transmit the first pilot signal, and/or REs used to transmit the first pilot signal within one RB. For example, the second information may indicate REs within one RB used to transmit the first pilot signal through a first bitmap of 12-bit or 16-bit length; where REs corresponding to values of 1 in the first bitmap is used to transmit the first pilot signal.

By this method, the second information can indicate, through the first bitmap, an RB used for transmitting the first pilot signal and/or REs used for transmitting the first pilot signal within a range of one RB, thereby improving flexibility of the second information indicating the frequency domain location of the time-frequency resource occupied by the first pilot signal.

In another possible implementation, the second information may indicate the frequency domain location of the time-frequency resource occupied by the first pilot signal through an identifier of a frequency domain resource.

It should be noted that the method in which the second information indicates the frequency domain location of the time-frequency resource occupied by the first pilot signal through the identifier of the frequency domain resource is a method in which the frequency domain location of the time-frequency resource occupied by the first pilot signal is directly indicated.

Exemplarily, the second information may indicate an RE within a range of one RB used for transmitting the first pilot signal through an identifier of the RE; and/or the second information may indicate an RB used to transmit the first pilot signal though an identifier of the RB.

By this method, the second information directly indicates the frequency domain location of the time-frequency resource occupied by the first pilot signal through the identifier of the frequency domain resource, thereby improving the flexibility of the second information indicating the frequency domain location of the time-frequency resource occupied by the first pilot signal.

### (3) Time domain location of the time-frequency resource occupied by the first pilot signal.

Through this method, the time domain location of the time-frequency resource occupied by the first pilot signal can be flexibly changed, thereby achieving a better balance between a total power of a pilot signal and channel estimation performance, and improving system performance.

In the embodiment of the present disclosure, the time domain location of the time-frequency resource occupied by the first pilot signal may be implemented in the following possible ways.

In one possible implementation, the second information may indicate a time domain density of the time-frequency resource occupied by the first pilot signal; alternatively, the time domain density of the time-frequency resource occupied by the first pilot signal is predetermined. The time domain location of the time-frequency resource occupied by the first pilot signal may be determined according to the time domain density of the time-frequency resource occupied by the first pilot signal.

In an embodiment of the present disclosure, the time domain density of the time-frequency resource occupied by the first pilot signal may include: a symbol density of the time-frequency resource occupied by the first pilot signal; and/or, a slot density of the time-frequency resource occupied by the first pilot signal.

When the time domain density of the time-frequency resource occupied by the first pilot signal is the symbol density of the time-frequency resource occupied by the first pilot signal, the symbol density of the time-frequency resource occupied by the first pilot signal may be a symbol density of the time-frequency resource occupied by the first pilot signal within a range of one slot. The symbol density of the time-frequency resource occupied by the first pilot signal within the range of one slot may be a third value, and the third value has a mapping relationship with a number of symbols of the time-frequency resource occupied by the first pilot signal within the range of one slot.

Further, the third value has a one-to-one mapping relationship with the number of symbols of the time-frequency resource occupied by the first pilot signal within the range of one slot.

In some embodiments, when the third value is less than or equal to 1, the number of symbols of the time-frequency resource occupied by the first pilot signal within the range of one slot is a product of the third value and a total number of symbols within the range of the slot.

For example, assuming that there are 14 symbols within a range of one slot, and the symbol density of the time-frequency resource occupied by the first pilot signal within the range of the slot is 1/2 (that is, the third value is 1/2), it can be obtained that the number of symbols of the time-frequency resource occupied by the first pilot signal within the range of the slot is 14 * 1/2 = 7.

For example, assuming that there are 14 symbols within a range of one slot, and the symbol density of the time-frequency resource occupied by the first pilot signal within the range of the slot is 1 (i.e., the third value is 1), it can be obtained that the number of symbols of the time-frequency resource occupied by the first pilot signal within the range of the slot is 14.

In other embodiments, when the third value is greater than 1, the number of symbols of the time-frequency resource occupied by the first pilot signal within a range of one slot is equal to the third value.

For example, assuming that there are 14 symbols within a range of one slot, and the symbol density of the time-frequency resource occupied by the first pilot signal within the range of the slot is 6 (i.e., the third value is 6), it can be obtained that the number of symbols of the time-frequency resource occupied by the first pilot signal within the range of the slot is 6.

According to this method, when the time domain density of the time-frequency resource occupied by the first pilot signal is the symbol density of the time-frequency resource occupied by the first pilot signal, the first device can flexibly change the symbol density of the time-frequency resource occupied by the first pilot signal according to the wireless environment, thereby better matching the current channel and improving system performance.

In a case where the time domain density of the time-frequency resource occupied by the first pilot signal is the slot density of the time-frequency resource occupied by the first pilot signal, the slot density of the time-frequency resource occupied by the first pilot signal may be a fourth value. Assuming that one slot out of every P slots is used for transmitting the first pilot signal, there is a mapping relationship between the fourth value and the value of P, where P is a positive integer.

Further, there is a one-to-one mapping relationship between the fourth value and the value of P.

In some embodiments, when the fourth value is less than or equal to 1, the value of P is the reciprocal of the fourth value.

For example, assuming that the slot density of the time-frequency resource occupied by the first pilot signal is 0.5 (that is, the fourth value is 0.5), the value of P is 1/0. 5 = 2, that is, one slot out of every two slots is used for transmitting the first pilot signal.

For example, assuming that the slot density of the time-frequency resource occupied by the first pilot signal is 1 (that is, the fourth value is 1), the value of P is 1, that is, each slot is used for transmitting the first pilot signal.

In other embodiments, when the fourth value is greater than 1, the value of P is equal to the fourth value.

For example, assuming that the slot density of the time-frequency resource occupied by the first pilot signal is 2 (that is, the fourth value is 2), the value of P is 2, that is, one slot out of every two slots is used for transmitting the first pilot signal.

It should be noted that at least part of symbols in one slot of the time-frequency resource occupied by the first pilot signal are used for transmitting the first pilot signal.

Further, the at least part of symbols may be one symbol in one slot, multiple symbols in one slot (not all symbols in one slot), or all symbols in one slot, and the embodiments of the present disclosure do not limit this.

According to this method, when the time domain density of the time-frequency resource occupied by the first pilot signal is the slot density of the time-frequency resource occupied by the first pilot signal, the first device can change the slot density of the time-frequency resource occupied by the first pilot signal with greater granularity according to the wireless environment. This method offers better flexibility, and is more conducive to multi-user multiplexing, thereby reducing pilot signal interference among multi-users.

In another possible implementation, the second information may indicate a time domain offset value of a time-frequency resource occupied by the first pilot signal; alternatively, the time domain offset value of the time-frequency resource occupied by the first pilot signal may be predetermined. The time domain location of the time-frequency resource occupied by the first pilot signal may be determined according to the time domain offset value of the time-frequency resource occupied by the first pilot signal.

In an embodiment of the present disclosure, the time domain offset value of the time-frequency resource occupied by the first pilot signal may include: a symbol offset value of the time-frequency resource occupied by the first pilot signal; and/or, a slot offset value of the time-frequency resource occupied by the first pilot signal.

When the time-domain offset value of the time-frequency resource occupied by the first pilot signal is the symbol offset value of the time-frequency resource occupied by the first pilot signal, according to the symbol offset value of the time-frequency resource occupied by the first pilot signal and the number of symbols of the time-frequency resource occupied by the first pilot signal within a range of one slot, the symbols of the time-frequency resource occupied by the first pilot signal within the range of the slot can be obtained.

For example, assuming that there are 14 symbols within a range of one slot, the symbol offset value of the time-frequency resource occupied by the first pilot signal is offset_symbol, and the number of symbols of the time-frequency resource occupied by the first pilot signal within the range of the slot is Q, identifiers of the symbols of the time-frequency resource occupied by the first pilot signal within the range of the slot are: offset_symbol, offset_symbol + 14/Q, offset_symbol + 2 * 14/Q, offset_symbol + 3 * 14/Q, respectively, where Q is a positive integer.

According to this method, when the time domain offset value of the time-frequency resource occupied by the first pilot signal is the symbol offset value of the time-frequency resource occupied by the first pilot signal, the first device can flexibly change symbol allocation of the time-frequency resource occupied by the first pilot signal, thereby better matching the current channel, being more conducive to multi-user multiplexing, and reducing pilot signal interference among multiple users.

When the time domain offset value of the time-frequency resource occupied by the first pilot signal is the slot offset value of the time-frequency resource occupied by the first pilot signal, slots of the time-frequency resource occupied by the first pilot signal can be obtained according to the slot offset value of the time-frequency resource occupied by the first pilot signal and the value of P (one slot out of every P slots is used for transmitting the first pilot signal).

For example, assuming that the slot offset value of the time-frequency resource occupied by the first pilot signal is offset_slot, identifiers of the slots of the time-frequency resource occupied by the first pilot signal are: offset_slot, offset_slot + P, offset_slot + 2 * P, offset_slot + 3 * P, and the like, respectively.

By this method, when the time domain offset value of the time-frequency resource occupied by the first pilot signal is the slot offset value of the time-frequency resource occupied by the first pilot signal, the first device can flexibly change slot allocation of the time-frequency resource occupied by the first pilot signal, thereby better matching the wireless channel, being more conducive to multi-user multiplexing, and reducing pilot signal interference among multi-users.

In another possible implementation, the second information may indicate a time domain pattern of a time-frequency resource occupied by the first pilot signal; alternatively, the time domain pattern of the time-frequency resource occupied by the first pilot signal is predetermined. The time domain location of the time-frequency resource occupied by the first pilot signal may be determined according to the time domain pattern of the time-frequency resource occupied by the first pilot signal.

In an embodiment of the present disclosure, the time domain pattern of the time-frequency resource occupied by the first pilot signal may include: a symbol pattern of the time-frequency resource occupied by the first pilot signal; and/or, a slot pattern of the time-frequency resource occupied by the first pilot signal.

When the time domain pattern of the time-frequency resource occupied by the first pilot signal is the symbol pattern of the time-frequency resource occupied by the first pilot signal, the symbol pattern may be determined by predetermination and/or according to a configuration from the network device. The symbol pattern may identify the time-frequency resource occupied by the first pilot signal.

It should also be noted that the exemplary description of the symbol pattern of the time-frequency resource occupied by the first pilot signal can be understood with reference to the description in the foregoing embodiments, and for the sake of brevity, redundant description will not be repeated here.

According to this method, when the time domain pattern of the time-frequency resource occupied by the first pilot signal is a symbol pattern of the time-frequency resource occupied by the first pilot signal, the first device can flexibly change symbol allocation of the time-frequency resource occupied by the first pilot signal, which can be more conducive to multi-user multiplexing and reduce pilot signal interference among multiple users. In addition, the symbol pattern of the time-frequency resource occupied by the first pilot signal may be determined by predetermination and/or according to the configuration from the network device, so that signaling overhead may be reduced.

In a case where the time domain pattern of the time-frequency resource occupied by the first pilot signal is a slot pattern of the time-frequency resource occupied by the first pilot signal, the slot pattern may be determined by predetermination and/or according to a configuration from a network device. The slot pattern may identify the time-frequency resource occupied by the first pilot signal.

It should also be noted that the exemplary description of the slot pattern of the time-frequency resource occupied by the first pilot signal can be understood with reference to the description in the foregoing embodiment, and for the sake of brevity, redundant description will not be repeated here.

According to this method, when the time domain pattern of the time-frequency resource occupied by the first pilot signal is the slot pattern of the time-frequency resource occupied by the first pilot signal, the first device can flexibly change slot allocation of the time-frequency resource occupied by the first pilot signal, thereby facilitating multi-user multiplexing and reducing pilot signal interference among multiple users. In addition, the slot pattern of the time-frequency resource occupied by the first pilot signal may be determined by predetermination and/or according to a configuration from a network device, so that signaling overhead may be reduced.

Based on the above several possible implementations, the time domain location of the time-frequency resource occupied by the first pilot signal may be determined according to one or more of the following parameters indicated through the second information:
a time domain density of the time-frequency resource occupied by the first pilot signal;
a time domain offset value of the time-frequency resource occupied by the first pilot signal; or,
a time domain pattern of the time-frequency resource occupied by the first pilot signal.

Exemplarily, the time domain location of the time-frequency resource occupied by the first pilot signal may be determined according to the time domain density of the time-frequency resource occupied by the first pilot signal. For example, the time domain location of the time-frequency resource occupied by the first pilot signal may be determined according to the symbol density of the time-frequency resource occupied by the first pilot signal, and at this time, the symbol offset value of the time-frequency resource occupied by the first pilot signal may be determined by predetermination and/or according to a configuration from the network device; and/or the time domain location of the time-frequency resource occupied by the first pilot signal may be determined according to the slot density of the time-frequency resource occupied by the first pilot signal, and at this time, the slot offset value of the time-frequency resource occupied by the first pilot signal may be determined by predetermination and/or according to a configuration from the network device.

Exemplarily, the time domain location of the time-frequency resource occupied by the first pilot signal may be determined according to a time domain offset value of the time-frequency resource occupied by the first pilot signal. For example, the time domain location of the time-frequency resource occupied by the first pilot signal may be determined according to the symbol offset value of the time-frequency resource occupied by the first pilot signal, and at this time, the symbol density of the time-frequency resource occupied by the first pilot signal may be determined by predetermination and/or according to a configuration from the network device; and/or, the time domain location of the time-frequency resource occupied by the first pilot signal may be determined according to the slot offset value of the time-frequency resource occupied by the first pilot signal, and at this time, the slot density of the time-frequency resource occupied by the first pilot signal may be determined by predetermination and/or according to a configuration from the network device.

Exemplarily, the time domain location of the time-frequency resource occupied by the first pilot signal may be determined according to the time domain pattern of the time-frequency resource occupied by the first pilot signal. For example, the time domain location of the time-frequency resource occupied by the first pilot signal may be determined according to the symbol pattern of the time-frequency resource occupied by the first pilot signal; and/or the time domain location of the time-frequency resource occupied by the first pilot signal may be determined according to the slot pattern of the time-frequency resource occupied by the first pilot signal.

Exemplarily, the time domain location of the time-frequency resource occupied by the first pilot signal may be determined according to the time domain density and the time domain offset value of the time-frequency resource occupied by the first pilot signal. For example, the time domain location of the time-frequency resource occupied by the first pilot signal may be determined according to the symbol density and/or the slot density of the time-frequency resource occupied by the first pilot signal, and the symbol offset value and/or the slot offset value of the time-frequency resource occupied by the first pilot signal.

Exemplarily, the time domain location of the time-frequency resource occupied by the first pilot signal may be determined according to the time domain density and the time domain pattern of the time-frequency resource occupied by the first pilot signal. For example, the time domain location of the time-frequency resource occupied by the first pilot signal may be determined according to the symbol density and/or the slot density of the time-frequency resource occupied by the first pilot signal and the symbol pattern and/or the slot pattern of the time-frequency resource occupied by the first pilot signal.

Exemplarily, the time domain location of the time-frequency resource occupied by the first pilot signal may be determined according to the time domain offset value and the time domain pattern of the time-frequency resource occupied by the first pilot signal. For example, the time domain location of the time-frequency resource occupied by the first pilot signal may be determined according to the symbol offset value and/or the slot offset value of the time-frequency resource occupied by the first pilot signal, and the symbol pattern and/or the slot pattern of the time-frequency resource occupied by the first pilot signal.

For example, the time domain location of the time-frequency resource occupied by the first pilot signal may be determined according to the time domain density, the time domain offset value, and the time domain pattern of the time-frequency resource occupied by the first pilot signal. For example, the time domain location of the time-frequency resource occupied by the first pilot signal may be determined according to the symbol density and/or the slot density of the time-frequency resource occupied by the first pilot signal, the symbol offset value and/or the slot offset value of the time-frequency resource occupied by the first pilot signal, and the symbol pattern and/or the slot pattern of the time-frequency resource occupied by the first pilot signal.

In the embodiment of the present disclosure, when the second information indicates the time domain location of the time-frequency resource occupied by the first pilot signal, there are two possible implementations as follows.

In one possible implementation, the second information indicates the time domain location of the time-frequency resource occupied by the first pilot signal through a second bitmap.

Exemplarily, the second information may indicate, through a second bitmap, a slot used to transmit the first pilot signal, and/or symbols used to transmit the first pilot signal within one slot. For example, the second information may indicate the symbols used to transmit the first pilot signal within a slot through a second bitmap of 14 bits in length; where symbols corresponding to values of 1 in the second bitmap are used for transmitting the first pilot signal.

By this method, the second information can indicate, through the second bitmap, a slot used for transmitting the first pilot signal and/or symbols used for transmitting the first pilot signal within one slot, thereby improving flexibility of the second information indicating the time domain location of the time-frequency resource occupied by the first pilot signal.

In another possible implementation, the second information may indicate the time domain location of the time-frequency resource occupied by the first pilot signal through an identifier of a time-domain resource.

Note that the method in which the second information indicates the time domain location of the time-frequency resource occupied by the first pilot signal through the identifier of the time-domain resource is a method in which the time domain location of the time-frequency resource occupied by the first pilot signal is directly indicated.

Exemplarily, the second information may indicate, through an identifier of a symbol, the symbol used for transmitting the first pilot signal within one slot; and/or the second information may indicate, through an identifier of a slot, the slot used to transmit the first pilot signal.

By this method, the second information directly indicates the time domain location of the time-frequency resource occupied by the first pilot signal through the identifier of the time-domain resource, thereby improving the flexibility of the second information indicating the time domain location of the time-frequency resource occupied by the first pilot signal.

### (4) a sequence generation method for the first pilot signal.

In the embodiment of the present disclosure, the sequence generation method for the first pilot signal may be a method for generating different types of sequences.

For example, the type of the sequence may be a Gold sequence, a ZC sequence, an M sequence, or the like, and the embodiments of the present disclosure are not limited thereto.

Through this method, a sequence between different users can be optimized based on the sequence generation method for the first pilot signal, interference between the sequences can be reduced, and system performance can be improved.

### (5) Sequence generation parameter of the first pilot signal.

By this method, the first information can flexibly indicate sequence generation of corresponding ports of the first pilot signal, thereby mitigating pilot sequence interference across multiple layers and improving system performance.

In some embodiments, the sequence generation parameter of the first pilot signal may include one or more of the following:
an identifier of a time domain resource in the time-frequency resource occupied by the first pilot signal;
an identifier of a system frame number (SNF) in which the first pilot signal is located;
an identifier of a cell in which the first pilot signal is located;
an identifier of a carrier on which the first pilot signal is located;
an identifier of a port of the first pilot signal;
a scrambling parameter of the first pilot signal;
an identifier of a control channel for a data signal; or,
other parameters configured by a network.

The identifier of the time domain resource in the time-frequency resource occupied by the first pilot signal may include one or more of the following: an identifier of a slot in the time-frequency resource occupied by the first pilot signal; an identifier of a symbol of the time-frequency resource occupied by the first pilot signal; or an identifier of a symbol of the time-frequency resource occupied by the first pilot signal in a slot or a subframe or a frame.

Exemplarily, the identifier of the cell in which the first pilot signal is located may be an identifier of a physical layer cell in which the first pilot signal is located.

Exemplarily, the carrier on which the first pilot signal is located may be a component carrier in carrier aggregation.

Exemplarily, the identifier of the control channel for the data signal may be a set identifier corresponding to a control resource set (CORESET).

The sequence generation corresponding to a port i of the first pilot signal may be based on the identifier i of the port. Further, the identifier of the port of the first pilot signal may be identifiers of some ports of the first pilot signal, or may be an identifier of each port of the first pilot signal, and this is not limited in the embodiment of the present disclosure.

It should also be noted that the sequence generation parameter of the first pilot signal may further include other related parameters configured by the network device.

Through this method, the sequence of the first pilot signal can be randomized, pilot sequence interference across multiple layers can be mitigated, thereby improving the system performance.

In some embodiments, pilot signals associated with multiple random access signal sets configured in the second information may be used for different channels. Alternatively, pilot signals associated with different random access signal sets may be used for different data/control information transmissions.

Exemplarily, for the first pilot signal associated with the first random access signal, it may be used for one or more of a subsequent downlink data channel, a downlink control channel, an uplink data channel, or an uplink control channel. That is, the terminal device and the network device use the first pilot signal for communication when subsequently transmitting one or more of the downlink data channel, the downlink control channel, the uplink data channel, or the uplink control channel.

It should be noted that in the embodiment of the present disclosure, since the terminal device indicates the first pilot signal through the first random access signal, when the first pilot signal is used for a downlink data channel, the downlink data channel may include a PDSCH that transmits a random access response (RAR) corresponding to the first random access signal. In the embodiment of the present disclosure, the RAR corresponding to the first random access signal is denoted as a first RAR. Further, when the first pilot signal is used for a downlink control channel, the downlink control channel may include a PDCCH for scheduling a PDSCH for the first RAR.

In the embodiment of the present disclosure, which channel or channels the first pilot signal is used for may be determined by a predetermined rule, or may be determined based on the above-described second information (at this time, the seventh information described above may refer to the second information in the embodiment).

It is understood that the network device may indicate to the terminal device, through the second information, a channel for which the first pilot signal is specifically used. That is, when the network device configures multiple random access signal sets for the terminal device (or that is, the network device configures multiple sets of random access signals for the terminal device), it can also simultaneously indicate channels for which pilot signals associated with different random access signal sets are respectively used.

By this method, the first pilot signal can be indicated for different channels, so that different channels can be distinguished, an optimal pilot signal can be selected for each channel, and performance of each channel can be improved.

In some embodiments, after the terminal device transmits the first information (i.e., the terminal device transmits the first random access signal) in S110, during receiving a first RAR corresponding to the first random access signal, the terminal device may receive the first RAR based on the first pilot signal associated with the first random access signal.

It should be noted that the terminal device receiving the first RAR may be refer to that: the terminal device receives a PDSCH for transmitting the first RAR; or the terminal device receives a PDCCH for scheduling the PDSCH for the first RAR; or the terminal device receives the PDSCH for transmitting the first RAR and the PDCCH for scheduling the PDSCH.

In some embodiments, referring to a third flowchart of a method for communication illustrated in FIG. 10A, after a terminal device transmits first information in S110, the communication method provided by the embodiment of the present disclosure may further include the following operations.

At S120A, a network device transmits third information to the terminal device, and correspondingly, the terminal device receives the third information transmitted by the network device. The third information is used to confirm a first pilot signal.

Here, the third information may be the first RAR in the above-described embodiment.

It can be understood that after receiving the first random access signal, the network device may transmit the third information to the terminal device. The network device may indicate in the third information whether to use the first pilot signal associated with the first random access signal in a subsequent channel transmission.

Exemplarily, the network device may instruct, through one piece of the third information, to use the first pilot signal associated with the first random access signal. In this way, in subsequent transmissions, the terminal device can perform corresponding reception and/or transmission according to the first pilot signal.

According to this method, the network device can confirm the first pilot signal associated with the first random access signal through the third information, enabling consistent understanding between the network device and the terminal device, so as to ensure communication reliability.

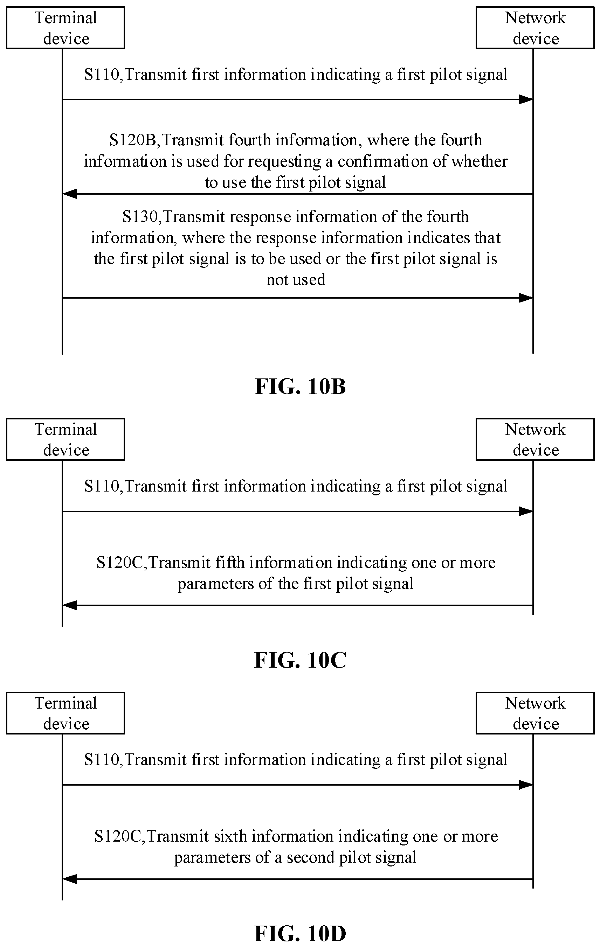

In some embodiments, referring to a fourth flowchart of a method for communication illustrated in FIG. 10B, after a terminal device transmits first information in S110, the communication method provided by the embodiment of the present disclosure may further include the following operations.

At S120B: a network device transmits fourth information to the terminal device, and correspondingly, the terminal device receives the fourth information transmitted by the network device. The fourth information is used for requesting a confirmation of whether to use the first pilot signal.

At S130: the terminal device transmits response information of the fourth information to the network device, and accordingly, the network device receives the response information. The response information is used to indicate that the first pilot signal is to be used or the first pilot signal is not used.

Here, the fourth information may be the first RAR in the above-described embodiment. The fourth information may instruct the terminal device to transmit confirmation information, and request the terminal device to confirm whether to use the first pilot signal associated with the first random access signal to perform corresponding reception and/or transmission.

Further, the terminal device determines whether to use the first pilot signal associated with the first random access signal in subsequent channel transmission based on the fourth information, and indicates, through response information of the fourth information, that the first pilot signal is to be used, or that the first pilot signal is not used.

According to this method, the network device can confirm the first pilot signal associated with the first random access signal through the fourth information and the response information of the fourth information, enabling consistent understanding between the network device and the terminal device to ensure reliability of communication.

In some embodiments, referring to a fifth flowchart of a method for communication illustrated in FIG. 10C, after a terminal device transmits first information in S110, the communication method provided by the embodiment of the present disclosure may further include the following operations.

At S120C, the terminal device receives fifth information transmitted by a network device. The fifth information is used to indicate one or more of the following parameters of a first pilot signal:
a type of the first pilot signal;
a power parameter of the first pilot signal;
a frequency domain location of a time-frequency resource occupied by the first pilot signal;
a time domain location of the time-frequency resource occupied by the first pilot signal ;
a sequence generation method for the first pilot signal; or,
a sequence generation parameter of the first pilot signal.

It should be noted that the description of the related parameters of the first pilot signal can be understood with reference to the description in the foregoing embodiments, and for the sake of brevity, the description will not be repeated here.

It should also be noted that the fifth information here may be the first RAR in the above embodiment.

It can be understood that the above parameters indicated through the fifth information may be supplements, adjustments, modifications, or updates to the parameters of the first pilot signal. In other words, the above-described parameters indicated in the fifth information may be additionally indicated based on predetermined parameters or parameters indicated in the second information.

Exemplarily, when some parameters of the first pilot signal are indicated in the second information and other parameters are not indicated, the network device may further indicate more parameters regarding the first pilot signal through the fifth information. Alternatively, the network device may adjust, modify, or update some parameters of the first pilot signal indicated in the original second information through the fifth information. In this way, the terminal device and the network device may use the first pilot signal to perform corresponding reception or transmission in combination with the parameters indicated through the second information and the parameters indicated through the fifth information. In this way, flexibility of parameter indication can be improved, the network device can optimize the pilot signal reported by the terminal device to a certain extent, thereby improving communication performance.

In some embodiments, with reference to a sixth flowchart of a method for communication illustrated in FIG. 10D, after a terminal device transmits first information, the communication method provided by the embodiment of the present disclosure may further include the following operations.

The terminal device receives sixth information transmitted by a network device. The sixth information is for indicating one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or,
a sequence generation parameter of the second pilot signal.

It should be noted that the description of the related parameters of the second pilot signal can be understood with reference to the description of the first pilot signal in the foregoing embodiment, and for the sake of brevity, the description will not be repeated here.

It should also be noted that the sixth information herein may be the first RAR in the above embodiment.

In an embodiment of the present disclosure, some parameters or all parameters of the second pilot signal are different from those of the first pilot signal. It can be understood that the network device may comprehensively consider the first pilot signal recommended by the terminal device through the first information and other factors (such as joint scheduling with other terminal devices, coexistence, etc.), select an appropriate pilot signal (herein referred to as the second pilot signal in the embodiment of the present disclosure) from the perspective of the whole system, and indicate the second pilot signal to the corresponding terminal device through the sixth information.

In this way, in subsequent transmissions, the terminal device may perform corresponding reception and/or transmission according to the second pilot signal indicated through the sixth information.

It should be noted that, similar to the first pilot signal, the second pilot signal may be used for one or more of a downlink data channel, a downlink control channel, an uplink data channel, or an uplink control channel. That is, the terminal device and the network device use the second pilot signal for communication when subsequently transmitting one or more of the downlink data channel, the downlink control channel, the uplink data channel, or the uplink control channel. Channel or channels for which the second pilot signal is specifically used may be determined according to a predetermined rule, or may be indicated through the sixth information.

If the terminal device and the network device have agreed on multiple pilot signals in advance, the network device may carry only an index value/identifier of the second pilot signal among the multiple signals in the sixth information. That is, the network device may indicate only the second pilot signal among the multiple pilot signals in the sixth information, and do not carry relevant parameters of the second pilot signal.

In this way, the network can comprehensively consider the first pilot signal recommended by the terminal device and other factors (such as joint scheduling and coexistence with other terminals, etc.), and select an appropriate pilot signal (including the first pilot signal indicated through the first information or the second pilot signal selected by the network device itself) for the corresponding terminal device from the perspective of the whole system, thereby improving the performance of the whole system.

Thus, according to the method provided by the embodiment of the present disclosure, the terminal device can indicate the first pilot signal to the network device through the transmitted first random access signal at an early stage of the random access procedure. In this way, the network device and the terminal device can use an optimized pilot signal (including the first pilot signal indicated through the first information or the second pilot signal selected by the network device itself) for communication before establishing an RRC connection, thereby improving communication performance and user experience.

Manner #B: the first information may indicate one or more parameters of the first pilot signal, thereby indicating the first pilot signal through the indicated one or more parameters. That is, the terminal device may explicitly indicate the first pilot signal through the first information.

The first information may indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or,
a sequence generation parameter of the first pilot signal.

It should be noted that the description of the related parameters of the first pilot signal can be understood with reference to the description in the foregoing embodiments, and for the sake of brevity, the description will not be repeated here.

In some embodiments, the first information may be carried by any one of the following:
a media access control element (MAC CE) signaling;
a random access message 3 (Message3, Msg3); or,
a random access message A (MessageA, MsgA).

It should be noted that the MAC CE signaling may be an MAC CE carried in uplink information in the random access procedure, for example, the MAC CE may be an MAC CE carried by Msg3 or an MAC CE carried by MsgA, and the embodiment of the present disclosure does not limit this.

Msg3 may be a signal transmitted by the terminal device for contention resolution, or Msg3 may be a MAC CE signaling for contention resolution (for example, a UE contention resolution identity MAC CE in 5G).

Exemplarily, Msg3 uses a temporary cell-radio network temporary identifier (C-RNTI).

Exemplarily, the MsgA transmission may be with a dedicated RNTI (e.g., MSGB-RNTI).

It should be noted that the first pilot signal may be used for different channels. Alternatively, the first pilot signal may be used for different data/control information transmissions.

Exemplarily, the first pilot signal may be used for one or more of a subsequent downlink data channel, a downlink control channel, an uplink data channel, or an uplink control channel. That is, the terminal device and the network device use the first pilot signal for communication when subsequently transmitting one or more of the downlink data channel, the downlink control channel, the uplink data channel, or the uplink control channel.

In the embodiment of the present disclosure, which channel or channels the first pilot signal is specific to may be determined according to a predetermined rule, or may be determined based on the first information transmitted by the terminal device to the network device or the seventh information transmitted by the network device to the terminal device.

It should be noted that determining a channel for which the first pilot signal can be used based on the first information or the seventh information can be understood with reference to the description in the above-described embodiment, and will not be repeated here for the sake of brevity.

By this method, the first pilot signal can be indicated for different channels, so that different channels can be distinguished, an optimal pilot signal can be selected for each channel, and the performance of each channel can be improved.

In some embodiments, after the terminal device transmits the first information (i.e., the terminal device transmits one or more parameters indicating the first pilot signal) at S110, the terminal device and the network device may perform corresponding reception and/or transmission based on the first pilot signal on a channel where the first pilot signal is available (i.e., one or more of the downlink data channel, the downlink control channel, the uplink data channel, or the uplink control channel described above).

In some embodiments, referring to a third flowchart of a communication method illustrated in FIG. 10A, after a terminal device transmits first information in S110, the communication method provided by the embodiment of the present disclosure may further include the following operations.

At S120A, a network device transmits third information to the terminal device, and correspondingly, the terminal device receives the third information transmitted by the network device. The third information is used to confirm a first pilot signal.

When the first information is Msg3 (or MAC CE signaling corresponding to Msg3), the third information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the third information may be response information of MsgA (or MAC CE signaling corresponding to response information of MsgA) or MsgB (or MAC CE signaling corresponding to MsgB), and the embodiment of the present disclosure does not limit this.

It can be understood that after receiving the first information, the network device may transmit the third information to the terminal device. The third information may indicate whether the first pilot signal associated with the first random access signal is used in an associated channel transmission.

According to this method, the network device can confirm the first pilot signal indicated in the first information through the third information, enabling consistent understanding between the network device and the terminal device, to ensure reliability of communication.

In some embodiments, referring to a fourth flowchart of a method for communication illustrated in FIG. 10B, after a terminal device transmits first information in S110, the communication method provided by the embodiment of the present disclosure may further include the following operations.

At S120B: a network device transmits fourth information to the terminal device, and correspondingly, the terminal device receives the fourth information transmitted by the network device. The fourth information is used for requesting a confirmation of whether to use the first pilot signal.

At S130: the terminal device transmits response information of the fourth information to the network device, and accordingly, the network device receives the response information. The response information is used to indicate that the first pilot signal is to be used or the first pilot signal is not used.

When the first information is Msg3 (or MAC CE signaling corresponding to Msg3), the fourth information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the fourth information may be response information of MsgA (or MAC CE signaling corresponding to response information of MsgA) or MsgB (or MAC CE signaling corresponding to MsgB), and the embodiment of the present disclosure does not limit this.

Further, the terminal device may determine, based on the fourth information, whether to use the first pilot signal indicated in the first information in subsequent channel transmission, and indicate, through response information of the fourth information, that the first pilot signal is to be used, or that the first pilot signal is not used.

According to this method, the network device can confirm the first pilot signal indicated in the first information through the fourth information and the response information of the fourth information, so that the network device and the terminal device can understand the same, thereby ensuring communication reliability.

In some embodiments, referring to a fifth flowchart of a communication method illustrated in FIG. 10C, after a terminal device transmits first information in S110, the communication method provided by the embodiment of the present disclosure may further include the following operations.

At S120C, the terminal device receives fifth information transmitted by a network device. The fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or,
a sequence generation parameter of the first pilot signal.

It should be noted that the description of the related parameters of the first pilot signal can be understood with reference to the description in the foregoing embodiments, and for the sake of brevity, the description will not be repeated here.

If the first information is Msg3 (or MAC CE signaling corresponding to Msg3), the fifth information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the fifth information may be response information of MsgA (or MAC CE signaling corresponding to response information of MsgA) or MsgB (or MAC CE signaling corresponding to MsgB), and the embodiment of the present disclosure does not limit this.

It can be understood that information content carried by Msg3, MsgA, and MAC CE signaling in the random access procedure is limited. Therefore, the first information carried by Msg3, MsgA, or MAC CE signaling may carry only a part of the parameters of the first pilot signal. For example, the first information may indicate only the type of the first pilot signal, or the first information may indicate only the power parameter of the first pilot signal.

In an embodiment of the present disclosure, the network device may supplement, adjust, modify, or update parameters of the first pilot signal through the fifth information. That is, the above-described parameters indicated in the fifth information may be additionally indicated on the basis of predetermined parameters or parameters indicated in first information indication.

Exemplarily, when some parameters of the first pilot signal is indicated in the first information and other parameters are not indicated, the network device may further indicate more parameters regarding the first pilot signal through the fifth information. Alternatively, the network device may adjust, modify, or update some parameters of the first pilot signal indicated in the original second information through the fifth information. In this way, the terminal device and the network device may use the first pilot signal to perform corresponding reception or transmission in combination with the parameters indicated in the first information and the parameters indicated in the fifth information. In this way, flexibility of parameter indication can be improved, the network device can optimize the pilot signal reported by the terminal device to a certain extent, thereby improving communication performance.

In some embodiments, with reference to a sixth flowchart of a communication method illustrated in FIG. 10D, after a terminal device transmits first information, the communication method provided by the embodiment of the present disclosure may further include the following operations.

The terminal device receives sixth information transmitted by a network device. The sixth information is for indicating one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or,
a sequence generation parameter of the second pilot signal.

It should be noted that the description of the related parameters of the second pilot signal can be understood with reference to the description of the first pilot signal in the foregoing embodiment, and for the sake of brevity, the description will not be repeated here.

If the first information is Msg3 (or MAC CE signaling corresponding to Msg3), the sixth information may be response information of Msg3 (or MAC CE signaling corresponding to response information of Msg3) or Msg4 (or MAC CE signaling corresponding to Msg4). If the first information is MsgA (or the MAC CE signaling corresponding to the MsgA), the sixth information may be the response information of the MsgA (or the MAC CE signaling corresponding to the response information of the MsgA) or the MsgB (or the MAC CE signaling corresponding to the MsgB), and the embodiment of the present disclosure does not limit this.

In an embodiment of the present disclosure, some parameters or all parameters of the second pilot signal are different from those of the first pilot signal. It can be understood that the network device may comprehensively consider the first pilot signal recommended by the terminal device through the first information and other factors (such as joint scheduling and coexistence with other terminal devices, etc.), select an appropriate pilot signal (herein referred to as the second pilot signal in the embodiment of the present disclosure) from the perspective of the whole system, and indicate the second pilot signal to the corresponding terminal device through the sixth information.

In this way, in subsequent transmissions, the terminal device may perform corresponding reception and/or transmission according to the second pilot signal indicated the sixth information.

It should be noted that, similar to the first pilot signal, the second pilot signal may be used for one or more of a subsequent downlink data channel, a downlink control channel, an uplink data channel, or an uplink control channel. That is, the terminal device and the network device use the second pilot signal for communication when subsequently transmitting one or more of the downlink data channel, the downlink control channel, the uplink data channel, or the uplink control channel. Which channel or channels the second pilot signal is specific to may be determined according to a predetermined rule, and may also be indicated through the sixth information.

If the terminal device and the network device have agreed on multiple pilot signals in advance, the network device may carry only an index value/identifier of the second pilot signal among the multiple signals in the sixth information. That is, the network device may indicate only the second pilot signal among the multiple pilot signals in the sixth information, and do not carry the relevant parameters of the second pilot signal.

In this way, the network can comprehensively consider the first pilot signal recommended by the terminal device and other factors (such as joint scheduling with other terminals, coexistence, etc.), and select an appropriate pilot signal (including the first pilot signal indicated through the first information or the second pilot signal selected by the network device itself) to the corresponding terminal device from the perspective of the whole system, thereby improving the performance of the whole system.

Thus, according to the method provided by the embodiment of the present disclosure, the terminal device can indicate the first pilot signal to the network device through Msg3 or MsgA in the early stage of the random access procedure. In this way, the network device and the terminal device can communicate using an optimized pilot signal (including the first pilot signal indicated through the first information or the second pilot signal selected by the network device itself) before establishing an RRC connection, thereby improving communication performance and user experience.

Manner #C: the first information is used to indicate the first pilot signal in the multiple pilot signals. Configuration parameters of the multiple pilot signals are predetermined.

Exemplarily, the first information indicating the first pilot signal of the multiple pilot signals may refer to that the first information indicates an index value of the first pilot signal in the multiple pilot signals; or, the first information indicates an identifier of the first pilot signal among the multiple pilot signals.

It can be understood that the communication system may predetermine configuration parameters of multiple pilot signals. The terminal device may indicate the index value/identifier of the first pilot signal in the first information, so that the network device may determine a configuration parameter of the first pilot signal according to the index value/identifier of the first pilot signal. The predetermination here may be predetermined according to a protocol, and/or predetermined by the network through broadcast messages/system messages.

In this embodiment, signaling overhead can be reduced by using a predetermined manner.

In some embodiments, the first information may be carried by any one of the following:
a MAC CE Signaling;
a Msg3; or,
a MsgA.

It should be noted that the above three types of signaling can be understood with reference to the relevant explanation in Manner #B, and will not be repeatedly described here for the sake of brevity.

It should also be noted that the first pilot signal may be used for different channels. Alternatively, the first pilot signal may be used for different data/control information transmissions.

Exemplarily, the first pilot signal may be used for one or more of a subsequent downlink data channel, a downlink control channel, an uplink data channel, or an uplink control channel. That is, the terminal device and the network device may use the first pilot signal for communication when subsequently transmitting one or more of the downlink data channel, the downlink control channel, the uplink data channel, or the uplink control channel.

In the embodiment of the present disclosure, which channel or channels the first pilot signal is specific to may be determined according to a predetermined rule, or may be determined based on the first information transmitted by the terminal device to the network device or the seventh information transmitted by the network device to the terminal device.

It should be noted that determining a channel for which the first pilot signal can be used based on the first information or the seventh information can be understood with reference to the description in the above-described embodiment, and will not be repeated here for the sake of brevity.

By this method, the first pilot signal can be indicated for different channels, so that different channels can be distinguished, an optimal pilot signal can be selected for each channel, and the performance of each channel can be improved.

In some embodiments, after the terminal device transmits the first information in S110 (i.e., the terminal device transmits one or more parameters indicating the first pilot signal), the terminal device and the network device may perform corresponding reception and/or transmission based on the first pilot signal on a channel for which the first pilot signal is used.

In some embodiments, referring to a third flowchart of a communication method illustrated in FIG. 10A, after a terminal device transmits first information in S110, the communication method provided by the embodiment of the present disclosure may further include the following operations.

At S120A, a network device transmits third information to the terminal device, and correspondingly, the terminal device receives the third information transmitted by the network device. The third information is used to confirm the first pilot signal.

When the first information is Msg3 (or MAC CE signaling corresponding to Msg3), the third information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the third information may be response information of MsgA (or MAC CE signaling corresponding to response information of MsgA) or MsgB (or MAC CE signaling corresponding to MsgB), and the embodiment of the present disclosure does not limit this.

It can be understood that after receiving the first information, the network device may transmit the third information to the terminal device. The third information may indicate whether the first pilot signal associated with the first random access signal is used in the associated channel transmission.

By this method, the network device can confirm the first pilot signal indicated in the first information through the third information, so that the network device and the terminal device can understand the same, thereby ensuring reliability of communication.

In some embodiments, referring to a fourth flowchart of a communication method illustrated in FIG. 10B, after a terminal device transmits first information at S110, the communication method provided by the embodiment of the present disclosure may further include the following operations.

At S120B, a network device transmits fourth information to the terminal device, and correspondingly, the terminal device receives the fourth information transmitted by the network device. The fourth information requests a confirmation of whether to use the first pilot signal.

At S130, the terminal device transmits response information of the fourth information to the network device, and accordingly, the network device receives the response information. The response information is used to indicate that the first pilot signal is to be used or the first pilot signal is not used.

When the first information is Msg3 (or MAC CE signaling corresponding to Msg3), the fourth information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the fourth information may be response information of MsgA (or MAC CE signaling corresponding to response information of MsgA) or MsgB (or MAC CE signaling corresponding to MsgB), and the embodiment of the present disclosure does not limit this.

Further, the terminal device may determine, based on the fourth information, whether to use the first pilot signal indicated in the first information in subsequent channel transmission, and indicate, through response information of the fourth information, that the first pilot signal is to be used, or that the first pilot signal is not used.

According to this method, the network device can confirm the first pilot signal indicated in the first information through the fourth information and the response information of the fourth information, so that the network device and the terminal device can understand the same, so as to ensure reliability of communication.

In some embodiments, referring to a fifth flowchart of a communication method illustrated in FIG. 10C, after a terminal device transmits the first information in S110, the communication method provided by the embodiment of the present disclosure may further include the following operations.

At S120C, the terminal device receives fifth information transmitted by a network device. The fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal ; or,
a sequence generation parameter.

It should be noted that the description of the related parameters of the first pilot signal can be understood with reference to the description in the foregoing embodiments, and for the sake of brevity, the description will not be repeated here.

If the first information is Msg3 (or MAC CE signaling corresponding to Msg3), the fifth information may be response information of Msg3 (or MAC CE signaling corresponding to response information of Msg3) or Msg4 (or MAC CE signaling corresponding to Msg4). If the first information is MsgA (or MAC CE signaling corresponding to MsgA), the fifth information may be response information of MsgA (or MAC CE signaling corresponding to response information of MsgA) or MsgB (or MAC CE signaling corresponding to MsgB), and the embodiment of the present disclosure does not limit this.

It can be understood that information content carried by Msg3, MsgA, and MAC CE signaling in the random access procedure is limited. Therefore, the first information carried by Msg3, MsgA, or MAC CE signaling may carry only a part of the parameters of the first pilot signal. For example, the first information may indicate only the type of the first pilot signal, or the first information may indicate only the power parameter of the first pilot signal, or the first information may indicate only the type and power parameter of the first pilot signal. The first information may also indicate other parameters among the aforementioned parameters of the first pilot signal.

In an embodiment of the present disclosure, the network device may supplement, adjust, modify, or update parameters of the first pilot signal through the fifth information. That is, the above-described parameters indicated in the fifth information may be additionally indicated in addition to predetermined parameters or parameters indicated in the first information indication.

Exemplarily, when some parameters of the first pilot signal is indicated in the first information and other parameters are not indicated, the network device may further indicate more parameters regarding the first pilot signal through the fifth information. Alternatively, the network device may adjust, modify, or update some parameters of the first pilot signal indicated in the original second information through the fifth information. In this way, the terminal device and the network device may use the first pilot signal to perform corresponding reception or transmission in combination with the parameters indicated in the first information and the parameters indicated in the fifth information. In this way, flexibility of parameter indication can be improved, the network device can optimize the pilot signal reported by the terminal device to a certain extent, thereby improving communication performance.

In some embodiments, with reference to a sixth flowchart of a communication method illustrated in FIG. 10D, after a terminal device transmits first information, the communication method provided by the embodiment of the present disclosure may further include the following operations.

The terminal device receives sixth information transmitted by a network device. The sixth information is for indicating one or more of the following parameters of a second pilot signal:
a type of the second pilot signal;
a power parameter of the second pilot signal ;
a frequency domain location of a time-frequency resource occupied by the second pilot signal;
a time domain location of the time-frequency resource occupied by the second pilot signal;
a sequence generation method for the second pilot signal; or,
a sequence generation parameter of the second pilot signal.

It should be noted that the description of the related parameters of the second pilot signal can be understood with reference to the description of the first pilot signal in the foregoing embodiment, and for the sake of brevity, the description will not be repeated here.

If the first information is Msg3 (or MAC CE signaling corresponding to Msg3), the sixth information may be response information of Msg3 (or MAC CE signaling corresponding to response information of Msg3) or Msg4 (or MAC CE signaling corresponding to Msg4). If the first information is MsgA (or the MAC CE signaling corresponding to the MsgA), the sixth information may be response information of the MsgA (or the MAC CE signaling corresponding to the response information of the MsgA) or the MsgB (or the MAC CE signaling corresponding to the MsgB), and the embodiment of the present disclosure does not limit this.

In an embodiment of the present disclosure, some parameters or all parameters of the second pilot signal are different from those of the first pilot signal. It can be understood that the network device may comprehensively consider the first pilot signal recommended by the terminal device through the first information and other factors (such as joint scheduling and coexistence with other terminal devices, etc.), select an appropriate pilot signal (herein referred to as the second pilot signal in the embodiment of the present disclosure) from the perspective of the whole system, and indicate the second pilot signal to the corresponding terminal device through the sixth information.

In this way, in the subsequent transmission, the terminal device may perform corresponding reception and/or transmission according to a pilot signal indicated by the X-th information.

It should be noted that, similar to the first pilot signal, the second pilot signal may be used for one or more of a subsequent downlink data channel, a downlink control channel, an uplink data channel, and an uplink control channel. That is, the terminal device and the network device use the second pilot signal for communication when subsequently transmitting one or more of the downlink data channel, the downlink control channel, the uplink data channel, and the uplink control channel. Which channel or channels the second pilot signal is specific to may be determined according to a predetermined rule, and may also be indicated through the sixth information.

If the terminal device and the network device have agreed on multiple pilot signals in advance, the network device may carry only an index value/identifier of the second pilot signal among the multiple signals in the sixth information. That is, the network device may indicate only the second pilot signal among the multiple pilot signals in the sixth information, and do not carry relevant parameters of the second pilot signal.

In this way, the network can comprehensively consider the first pilot signal recommended by the terminal device and other factors (such as joint scheduling and coexistence with other terminals, etc.), and select an appropriate pilot signal (including the first pilot signal indicated by the first information or the second pilot signal selected by the network device itself) for the corresponding terminal device from the perspective of the whole system, thereby improving the performance of the whole system.

Thus, according to the method provided by the embodiment of the present disclosure, the terminal device can indicate the first pilot signal to the network device through Msg3 and MsgA in the early stage of the random access procedure. In this way, the network device and the terminal device can communicate using an optimized pilot signal (including the first pilot signal indicated by the first information or the second pilot signal selected by the network device itself) before establishing the RRC connection, thereby improving communication performance and user experience.

In an embodiment of the present disclosure, the communication method provided by the embodiment of the present disclosure may further include the following operations.

A terminal device transmits capability information to a network device, and accordingly, the network device may receive the capability information transmitted by the terminal device. The capability information characterizes that the terminal device supports a first type of pilot signal, and the first type of pilot signal refers to a pilot signal at least part of whose time-frequency resources are used for transmitting a data signal.

It should be noted that, in a dual connectivity or CA scenario, the terminal device may further transmit capability information to the network device before transmitting the first information to the network device.

It can be understood that in the random access procedure, because information transmitted between the terminal device and the network device is limited, the network device and the terminal device have agreed on some information, some parameters, or some optional values of some parameters. By reporting the capability information by the terminal device, more capabilities that the terminal device can support can be reported on the basis of the above embodiments, for example, more information, more parameters, more optional values of some parameters, and the like can be reported.

The terminal device may transmit the capability information to the network device through RRC signaling or MAC CE signaling.

In some embodiments, the capability information is a capability for any of the following:
a frequency band;
a frequency band combination (i.e., a band combination);
each frequency band in the frequency band combination;
each carrier in each frequency band in the frequency band combination;
a frequency band range (i.e., a frequency range, FR); or,
the terminal device.

The capability information may be a capability for a frequency band. That is, for a different frequency band (per band), the terminal device can independently report corresponding capability information. Based on this, the terminal device can have a greater degree of freedom, for example, the terminal device can support reporting of corresponding capability information in a certain frequency band or certain frequency bands, and does not support reporting of corresponding capability information in other frequency bands, so that more terminal devices can report supported capability information.

It should also be noted that the capability information may be a capability for a frequency band combination, that is, the terminal device may independently report corresponding capability information for a different frequency band combination (per band combination). Based on this, the terminal device may have a greater degree of freedom, for example, the terminal device may support reporting of corresponding capability information in a certain frequency band combination or certain frequency band combinations, and may not support reporting of corresponding capability information in other frequency band combinations, thereby enabling more terminal devices to support reporting of corresponding capability information.

It should also be noted that the capability information may be a capability for each frequency band in a frequency band combination, that is, the terminal device may independently report corresponding capability information for each frequency band in a different frequency band combination (per band per band combination). Based on this, the terminal device may have a greater degree of freedom, for example, the terminal device may not support reporting the corresponding capability information in a certain CA combination, but may support reporting the corresponding capability information in a certain frequency band in another CA combination, thereby enabling more terminal devices to support reporting the corresponding capability information.

Further, the capability information may be a capability for each carrier in each frequency band in a frequency band combination, that is, the terminal device may independently report corresponding capability information for a different component carriers (CC) in a frequency band in a different frequency band combination (per CC per band per band combination). Based on this, the terminal device can have a greater degree of freedom, for example, corresponding capability information for different frequency band combinations can be separately reported, and corresponding capability information for different carriers in one frequency band can also be separately reported, so that more terminal devices can support reporting corresponding capability information.

The capability information may be a capability for an FR, that is, the terminal device may independently report corresponding capability information for a different FR (per FR). Based on this, the terminal device can have a greater degree of freedom, for example, there are two FRs, which are denoted as a low-frequency FR (i.e., FR1) and a high-frequency FR (i.e., FR2), respectively, FR1 may not support reporting of corresponding capability information, and FR2 may support reporting of corresponding capability information, so that more terminal devices can support reporting of corresponding capability information.

The capability information may be a capability for a terminal device. Based on this, when the terminal device reports the capability information, it can be considered that the terminal device can support the reporting of capability information in each frequency band, and thus signaling overhead of capability reporting of the terminal device can be reduced.

In summary, according to the communication method provided by the embodiment of the present disclosure, the terminal device may indicate the selected first pilot signal to the network device through the first information. In this way, the network device can determine a pilot signal (including a first pilot signal indicated through the first information or a second pilot signal selected by the network device itself) suitable for the terminal device based on the first information, so as to communicate with the terminal device according to the pilot signal, thereby improving transmission performance.

Hereinafter, the communication method provided by the embodiment of the present disclosure will be described in detail with reference to specific application scenarios.

In the method provided by the embodiment of the present disclosure, the terminal device may suggest a better DMRS to the network device during the random access procedure, so that the network device can adopt an optimized DMRS scheme in advance, thereby improving communication performance of the terminal device during the random access procedure and after accessing the network device (before entering the RRC connected state) and improving user experience.

Three specific embodiments will be described below.

### First embodiment

In the first embodiment, a terminal device may indicate a DMRS to a network device through an RACH. The first embodiment may include the following operations.

At S1: the network device transmits first indication information to the terminal device. The first indication information indicates two or more different RACH signal sets, and each RACH signal set corresponds to a different DMRS.

The first indication information in the first embodiment may be the second information in the above embodiments.

For example, the first indication information indicating the two or more RACH signal sets may mean that the network device indicates two or more different RACH signal sets (or two or more sets of different RACH signals) for each of the one or more synchronization signals. It can be understood that in a communication system, each synchronization signal (for example, a SSB in 5G) has a corresponding RACH configuration. Take a synchronization signal A as an example, which corresponds to A_ RACH. In this embodiment, for the synchronization signal A, two different RACH signal sets, denoted as RACH_Set1 and RACH_Set2, may be configured. That is, RACH signals corresponding to RACH_Set1 and RACH_Set2 both belong to A_RACH (that is, they are both associated with the synchronization signal A). Further, RACH_Set1 and RACH_Set2 may be associated with two different DMRSs, respectively.

For another example, the network device indicates two or more RACH signal sets, which may mean that the network device indicates different RACH signal sets for two or more synchronization signals, respectively. Taking two synchronization signals as an example (denoted as A and B, respectively), the network device may indicate a random access signal set RACH_SetA for the synchronization signal A and a random access signal set RACH_SetA for the synchronization signal B, and these two different RACH signal sets correspond to different DMRSs, respectively.

In some embodiments, RACH signals in different RACH signal sets of the two or more RACH signal sets may remain different in one or more of the following parameters, or correspond to different parameters (in this case, the parameters may be predetermined):
a signal sequence;
a signal root sequence;
a parameter used for generating the signal sequence;
a time domain resource;
a frequency domain resource;
a RACH occasion;
a preamble; or,
a preamble format.

In some embodiments, a DMRS corresponding to each of the aforementioned RACH signal sets may be for a different channel or a different data/control information transmission.

For example, the DMRS may be a DMRS for subsequent downlink control channel transmission (for example, a DMRS in a PDCCH), or a DMRS for subsequent downlink data channel transmission (for example, a DMRS in a PDSCH), or a DMRS for subsequent downlink data channel transmission and a DMRS for subsequent downlink control channel transmission (for example, a DMRS in a PDSCH and a DMRS in a PDCCH).

For example, the DMRS may be a DMRS for subsequent uplink control channel transmission (for example, a DMRS in a PUCCH), or a DMRS for subsequent uplink data channel transmission (for example, a DMRS in a PUSCH), or a DMRS for subsequent uplink data channel transmission and a DMRS for subsequent uplink control channel transmission (for example, a DMRS in a PUSCH and a DMRS in a PUCCH).

For example, the DMRS may be a DMRS for subsequent downlink and uplink control channel transmission (for example, a DMRS in a PDCCH and a DMRS in a PUCCH), or a DMRS for subsequent downlink and uplink data channel transmission (for example, a DMRS in a PDSCH and a DMRS in a PUSCH), or a DMRS for subsequent downlink and uplink data channel transmission and a DMRS for subsequent downlink and uplink control channel transmission (for example, a DMRS in a PDSCH, a DMRS in a PUSCH, a DMRS in a PDSCH, and a DMRS in a PUCCH).

In some embodiments, which channel or channels the DMRS is specific to may be determined according a predetermined rule.

In some embodiments, which channel or channels the DMRS is specific to may be indicated through the first indication information. For example, the first indication information may include one or more first fields, and different values in the first fields indicate which channel or channels the DMRS is specific to.

By this method, the first pilot signal can be indicated for different channels, so that different channels can be distinguished, an optimal pilot signal can be selected for each channel, and performance of each channel can be improved.

In some embodiments, the first indication information is transmitted through first signaling. The first signaling may be implemented through one or more of the following message/signaling combinations:
a broadcast message (MIB);
a system message (SIB);
a dedicated signaling; or,
a RRC signaling.

For example, the first indication information is indicated through a broadcast message (MIB). For another example, the first indication information is indicated through a system message. For another example, the first indication information is indicated through a broadcast message (MIB) and a system message. Other examples and combinations will not be exemplified one by one, but can be directly generalized.

It should be noted that when a same type of signaling/messages are used, multiple signaling/messages of the same type may be used for indication. For example, the first indication information may correspond to multiple system messages, that is, different pieces of information in the first indication information may be indicated through different system messages.

A different DMRS corresponds to each of the aforementioned RACH signal sets. Assuming that there are multiple different DMRSs, taking M = 2 DMRSs as an example, they are denoted as a first DMRS and a second DMRS, respectively. The first DMRS and the second DMRS can be easily and directly extended to more different DMRSs, and will not be described in detail.

In one possible implementation, the first DMRS and the second DMRS are orthogonal DMRSs, that is, the first DMRS and the second DMRS both belong to the first type of pilot signal described above.

It can be understood that REs used by the first DMRS and REs used by the data signal do not overlap, that is, the REs used by the first DMRS are different from the REs used by the data signal. Further, REs used by the second DMRS and the REs used by the data signal do not overlap, that is, the REs used by the second DMRS are different from the REs used by the data signal. By configuring orthogonal DMRSs and avoiding an introduction of a new DMRS, system complexity can be reduced.

The first DMRS and the second DMRS are different in that one or more of the following parameters are different:
a power parameter;
a time domain location of an occupied time-frequency resource;
a frequency domain location of the occupied time-frequency resource;
a sequence generation method for a pilot signal; or,
a sequence generation parameter.

Among them, the network device may indicate a DMRS corresponding to a RACH signal set in different ways.

Exemplarily, parameters related to the first DMRS and the second DMRS are specified in advance. The first indication information may indicate whether a different RACH signal set corresponds to the first DMRS or the second DMRS. For example, the first indication information includes one or more second fields, and the second fields may be associated with different RACH signal sets. Different values of the second field indicate whether the associated RACH signal set corresponds to the first DMRS or the second DMRS.

Exemplarily, a parameter related to the first DMRS is specified in advance, i.e., the first DMRS is a default DMRS. The first indication information may indicate one or more parameters of the second DMRS. For example, one or more third fields are included in the first indication information, and the third fields may be associated with different RACH signal sets. If a third field is configured, the third field may indicate parameters of a second DMRS corresponding to the associated RACH signal set; if the third field is not configured, the corresponding RACH signal set corresponds to the first DMRS (i.e., the default DMRS). This has an advantage that if the default DMRS is indicated, signaling overhead can be reduced, and at the same time, sufficient flexibility can be provided to configure the second DMRS.

Exemplarily, the first indication information indicates one or more parameters of the first DMRS and one or more parameters of the second DMRS. For example, the first indication information includes one or more fourth fields, and the fourth fields may be associated with different RACH signal sets. The fourth filed may indicate parameters of a first DMRS/second DMRS corresponding to the associated RACH signal set. The advantage of this is that each DMRS can be flexibly configured, thereby providing an optimization space for the system.

In another possible implementation, the first DMRS is a non-orthogonal DMRS and the second DMRS is an orthogonal DMRS. That is, the first DMRS belongs to the second type of pilot signal mentioned above, and the second DMRS belongs to the first type of pilot signal mentioned above. It can be understood that the terminal device may use the non-orthogonal DMRS, which allows the data signal to use more REs by sharing the same REs with the data signal, thereby increasing the transmission rate or improving the transmission reliability.

In this implementation, the network device may indicate DMRSs corresponding to different RACH signal sets in multiple ways.

Exemplarily, parameters related to the first DMRS and the second DMRS are specified in advance. The first indication information may indicate whether a different RACH signal set corresponds to the first DMRS or the second DMRS. For example, the first indication information includes one or more fifth fields, which indicate the DMRS corresponding to the RACH signal set by taking different values. The DMRS corresponding to the RACH signal set may be indicated by whether or not a fifth field is configured. For example, when the fifth field is not configured, it indicates that the RACH signal set corresponds to the second DMRS, and when the fifth field is configured, it indicates that the RACH signal set corresponds to the first DMRS; alternatively, when the fifth field is not configured, the RACH signal set is indicated to correspond to the first DMRS, and when the fifth field is configured, the RACH signal set is indicated to correspond to the second DMRS. In this method, signaling overhead can be reduced by specifying the related parameters of DMRS in advance.

Exemplarily, the first DMRS-related parameter is specified in advance, i.e., the first DMRS is a default DMRS. The first indication information indicates one or more parameters of the second DMRS. For example, the first indication information includes one or more sixth fields, and the parameters of the second DMRS are indicated by the sixth fields. If the sixth field is not configured, the corresponding RACH signal set corresponds to the first DMRS (i.e., the default DMRS). In this method, when the first indication information indicates the default DMRS, signaling overhead can be reduced, and at the same time, sufficient flexibility can be provided to configure another DMRS.

Exemplarily, the second DMRS-related configuration/parameter is specified in advance, i.e., the second DMRS is a default DMRS. The first indication information indicates one or more parameters of the first DMRS. For example, the first indication information includes one or more seventh fields, and the parameters of the first DMRS are indicated by the seventh fields. If the seventh field is not configured, the corresponding RACH signal set corresponds to the second DMRS (i.e., the default DMRS). In this method, when the first indication information indicates the default DMRS, signaling overhead can be reduced, and at the same time, sufficient flexibility can be provided to configure another DMRS.

Exemplarily, the first indication information indicates one or more parameters of the first DMRS and one or more parameters of the second DMRS. For example, the first indication information includes one or more eighth fields, and the parameters of the first DMRS/second DMRS are indicated by the eighth fields. For another example, the first indication information uses a CHOICE structure to indicate whether it is the first DMRS or the second DMRS by configuring different fields. These two different fields in the CHOICE structure are denoted as a ninth field and a tenth field. When the ninth field is configured, it is used to indicate the first DMRS, and when the tenth field is configured, it is used to indicate the second DMRS. This method can flexibly configure each DMRS, which provides optimization space for the system.

It should be noted that, in S1, each RACH signal set corresponds to a different DMRS. Therefore, there are DMRSs with a number greater than 2. Taking three DMRSs as an example, two of the three DMRSs may be orthogonal DMRSs and one DMRS may be a non-orthogonal DMRS. Other numbers of DMRSs can be derived, which will not be repeated here.

It should also be noted that, for the non-orthogonal first DMRS, since the RE of the first DMRS can also be used to transmit a data signal simultaneously, a specific receiver is required to demodulate the data signal transmitted on the same RE.

For example, the receiver herein may be an iterative receiver, an AI/ML receiver, or the like, and the embodiment of the present disclosure is not limited thereto.

It should be noted that the receiver may adopt various algorithms such as deep learning. Exemplarily, the receiver may employ one or a combination of a fully convolutional network (FCN), a convolutional neural network (CNN), a recurrent neural network (RNN), or a transformer neural network architecture.

It should be understood that the premise of using a receiver to demodulate the data signal is that the terminal device needs to know the relevant parameters of the first DMRS; otherwise, it will lead to a mismatch between the receiver and an actually received data signal, resulting in performance degradation.

Exemplarily, the relevant parameter of the first DMRS may include one or more of the following:
a power parameter;
a frequency domain location of a time-frequency resource occupied by the first DMRS;
a time domain location of the time-frequency resource occupied by the first DMRS;
a sequence generation method for the first DMRS; or,
a sequence generation parameter of the first DMRS.

In some embodiments, the first indication information indicates a power parameter of the first DMRS, or the power parameter of the first DMRS is predetermined (e.g., predetermined according to a protocol, or predetermined based on network broadcast information, etc.).

It can be understood that if the power parameter of the first DMRS is indicated through the first indication information, the network device can flexibly indicate the power allocation of the DMRS, so that the system can optimize DMRS transmission power according to wireless environment and improve system performance; if the power parameter of the first DMRS are predetermined, signaling overhead can be saved.

In some embodiments, for a non-orthogonal first DMRS, the power parameter of the first DMRS may be one or more of the following:
a ratio of a power of the first DMRS transmitted on a shared RE to a total power on the shared RE (i.e., a total power of the DMRS and data);
a ratio of a power of a data signal on the shared RE to the total power on the shared RE (i.e., the total power of the DMRS and data);
a ratio of the power of the first DMRS transmitted on the shared RE to the power of the data signal transmitted on the shared RE;
a ratio of the power of the data signal transmitted on the shared RE to the power of the first DMRS transmitted on the shared RE; or,
a ratio of a transmission power of the first DMRS to a total power on one RE (i.e., whether the RE is shared or not).

The ratio may be a linear value or a dB value. For example, the linear value is 0.1, and the corresponding dB value is -10 dB, or 10 dB.

In some embodiments, the first indication information indicates a frequency domain resource location of the first DMRS, or the frequency domain resource location of the first DMRS is predetermined (e.g., predetermined according to a protocol, or predetermined based on network broadcast information, etc.). By indicating the frequency domain resource location of the first DMRS through the first indication information, the frequency domain resource location of the first DMRS can be flexibly changed, which can better facilitate to multi-user multiplexing, thereby reducing DMRS interference between users.

Exemplarily, the first indication information may indicate a frequency domain density corresponding to the first DMRS (e.g., indicating how many REs are occupied in one RB), and/or an offset value of the first DMRS in the frequency domain (e.g., an RE offset value).

Exemplarily, the first indication information may indicate which frequency domain resources are occupied by the first DMRS through a bitmap or by directly indicating identifiers of the frequency domain resources (e.g., RE(s), RB(s)).

Exemplarily, the first indication information may indicate a frequency domain pattern adopted by the first DMRS from multiple candidate frequency domain patterns. The candidate frequency domain patterns are determined according to a pre-defined rule and/or determined based on a network configuration. Each frequency domain pattern may identify which resources in the frequency domain may be used for the first DMRS. Taking FIGS. 8 and 9 as an example, two frequency domain patterns are defined in advance, and the first indication information may indicate which frequency domain pattern is to be used.

For example, the frequency domain pattern of FIG. 9 is specified in advance, and as long as the first indication information indicates the first DMRS, the frequency domain pattern shown in FIG. 9 is adopted.

In some embodiments, the first indication information may indicate a time domain resource location of the first DMRS, or the time domain resource location of the first DMRS is predefined (e.g., predefined according to a protocol, or predefined based on network broadcast information, etc.). By indicating the time domain resource location of the first DMRS through the first indication information, a time domain density and/or the time domain resource location of the first DMRS can be flexibly changed, and a good compromise between performance and complexity can be achieved.

Exemplarily, the first indication information indicates a time domain density of the first DMRS, that is, indicates that the first DMRS is transmitted on one symbol out of every Z symbols.

Exemplarily, the first indication information indicates which symbols (e.g., which symbols within a slot) are used by the first DMRS through a bitmap or by directly indicating symbol numbers.

Exemplarily, the first indication information may indicate which time domain pattern is adopted by the first DMRS from multiple candidate time domain patterns. The candidate time domain patterns are determined according to a pre-defined rule and/or determined based on a network configuration. Each time domain pattern may identify which symbols are occupied by the first DMRS. This method can reduce signaling overhead.

In some embodiments, the first indication information may indicate the sequence generation parameter of the first DMRS, or the sequence generation parameter of the first DMRS are predefined (e.g., predefined according to a protocol, or predefined based on network broadcast information, etc.).

Exemplarily, the sequence generation parameter of the first DMRS may include one or more of the following:
an identifier of a time domain resource in a time-frequency resource occupied by the first DMRS;
an identifier of a system frame number (SNF) in which the first DMRS is located;
an identifier of a cell in which the first DMRS is located;
an identifier of a carrier on which the first DMRS is located;
an identifier of a port of the first DMRS;
a scrambling parameter of the first DMRS;
an identifier of a control channel for scheduling a data signal; or,
other parameters configured by a network.

At S2, the terminal device selects a RACH from the at least two configured RACH signal sets based on the first indication information, and transmits the RACH to the network device.

It should be noted that the RACH in the first embodiment may be the first information in the above embodiments.

As can be understood, a RACH signal set has an association with a DMRS. The terminal device may select a most matching DMRS (herein referred to as a third DMRS) according to one or more of the following: a type of a DMRS supported by the terminal device, wireless channel environment between the terminal device and the network device, or a measurement result of a speed. Further, the terminal device selects a random access signal from a RACH signal set associated with the third DMRS, and transmits the random access signal to the network device. In this way, the network device can determine that the most matching DMRS is the third DMRS associated with the RACH signal set according to the random access signal transmitted by the terminal device.

It should be noted that the third DMRS may be either the first DMRS or the second DMRS in S1.

Further, the terminal device and the network device may perform any one of the following operations.

At S3A (option 1): when the terminal device receives an RAR (referred to as the first RAR) corresponding to the random access signal, the terminal device receives the RAR according to the third DMRS.

It should be noted that receiving the first RAR may be refer to: receiving a PDSCH that transmits the first RAR, or receiving a PDCCH that schedules the PDSCH for the first RAR, or receiving the PDSCH that transmits the first RAR and the PDCCH that schedules the PDSCH.

At S3B (option 2), the network device transmits a RAR corresponding to the random access signal (denoted as a first RAR), where the first RAR may indicate one or more of the following parameters:
a power parameter corresponding to the third DMRS;
a frequency domain location of a time-frequency resource occupied by the third DMRS;
a time domain location of the time-frequency resource occupied by the third DMRS;
a sequence generation method corresponding to the third DMRS; or,
a sequence generation parameter corresponding to the third DMRS.

It can be understood that the above parameters indicated in the first RAR may be supplements or updates to the indicated parameters of the third DMRS. That is, the above-described parameters indicated in the first RAR may be additionally indicated in addition to predetermined parameters or parameters indicated through the first indication information.

For example, when some parameters of the third DMRS are indicated in the first indication information and other parameters are not indicated, the network device may further indicate more parameters related to the third DMRS through the first RAR. Alternatively, the network device updates part of the parameters indicated in the original first indication information. Flexibility of parameter indication can be improved, and the network device can optimize the pilot signal reported by the terminal device to a certain extent, thereby improving communication performance.

At S3C (option 3), the network device transmits a RAR (denoted as a first RAR) corresponding to the random access signal, where the first RAR indicates confirmation information of the third DMRS, for example, one piece of information in the first RAR is used to indicate that the third DMRS is to be used. In a subsequent transmission, a first terminal device may perform corresponding reception and/or transmission according to the third DMRS. Compared with option 1, the network device may confirm the third DMRS associated with the RACH signal set through the first RAR, so that the network device and the terminal device can understand the same, thereby ensuring reliability of communication.

At S3D (option 4): the network device transmits a RAR corresponding to the random access signal (denoted as a first RAR), where the first RAR instructs the terminal to transmit confirmation information (for example, confirming that the third DMRS is to be adopted), and then the terminal device transmits the confirmation information. In a subsequent transmission, the first terminal device may perform corresponding reception and/or transmission according to the third DMRS. Compared with option 1, the network device may confirm the third DMRS associated with the RACH signal set through the first RAR, so that the network device and the terminal device can understand the same to ensure reliability of communication.

Thus, in the first embodiment, the terminal device may indicate the matching third DMRS to the network device through the transmitted random access signal at an early stage of the random access procedure. In this way, the network device and the terminal device can communicate using the optimized pilot signal before establishing the RRC connection, thus improving the communication performance and improving the user experience.

### Second embodiment

In the second embodiment, a terminal device may indicate a DMRS to a network device through an Msg3 or an MsgA. The second embodiment may include the following operations.

At S1, the terminal device transmits first reporting information to the network device. The first reporting information is used to indicate a fourth DMRS.

The first reporting information may indicate one or more parameters of the fourth DMRS.

Exemplarily, the first reporting information may indicate one or more of the following parameters of the fourth DMRS:
a type of the fourth DMRS;
a power parameter corresponding to the fourth DMRS;
a frequency domain location of a time-frequency resource occupied by the fourth DMRS;
a time domain location of the time-frequency resource occupied by the fourth DMRS;
a sequence generation method corresponding to the fourth DMRS; or,
a sequence generation parameter corresponding to the fourth DMRS.

In some embodiments, a RE used by the fourth DMRS does not overlap with a RE used by a data signal, that is, the fourth DMRS uses an RE different from that of the data signal (referred to as a fifth DMRS). It can be understood that an orthogonal DMRS is used to avoid introducing a new DMRS and reduce system complexity.

In some embodiments, one or more or all of the REs used by the fourth DMRS are also REs used by the data signal (i.e., shared REs) (denoted as a sixth DMRS). By using a non-orthogonal DMRS, more REs can be used for data signals, thereby increasing transmission rate, or improving transmission reliability.

The first reporting information in the second embodiment is the first information described above.

It should also be noted that the terminal device may select a most matching DMRS (herein referred to as a fourth DMRS) according to one or more of the following: a type of a DMRS supported by the terminal device, wireless channel environment between the terminal device and the network device, or a speed measurement result, and report the fourth DMRS to the network device through the first reporting information.

The fourth DMRS may be for different channels or different data/control information transmissions.

For example, the fourth DMRS may be a DMRS for subsequent downlink control channel transmission (for example, a DMRS in a PDCCH), or a DMRS for subsequent downlink data channel transmission (for example, a DMRS in a PDSCH), or a DMRS for subsequent downlink data channel transmission and a DMRS for subsequent downlink control channel transmission (for example, a DMRS in a PDSCH and a DMRS in a PDCCH).

For example, the fourth DMRS may be a DMRS for subsequent uplink control channel transmission (for example, a DMRS in a PUCCH), or a DMRS for subsequent uplink data channel transmission (for example, a DMRS in a PUSCH), or a DMRS for subsequent uplink data channel transmission and a DMRS for subsequent uplink control channel transmission (for example, a DMRS in a PUSCH and a DMRS in a PUCCH).

For example, the fourth DMRS may be a DMRS for subsequent downlink and uplink control channel transmissions (for example, a DMRS in a PDCCH and a DMRS in a PUCCH), or may be a DMRS for subsequent downlink and uplink data channel transmissions (for example, a DMRS in a PDSCH and a DMRS in a PUSCH), or may be a DMRS for subsequent downlink and uplink data channel transmissions and a DMRS for subsequent downlink and uplink control channel transmissions (for example, a DMRS in a PDSCH, a DMRS in a PUSCH, a DMRS in a PDCCH and a DMRS in a PUCCH).

In some embodiments, which channel or channels the fourth DMRS is specific to may be determined according to a predetermined rule.

In some embodiments, which channel or channels the fourth DMRS is specific to may be indicated through the first reporting information. For example, the first reporting information may include one or more eleventh fields, and different values of the eleventh fields indicate which channel or channels the fourth DMRS is specifically targeted to.

It can be understood that the first pilot signal can be indicated for different channels, so that the different channels can be distinguished, a best pilot signal can be selected for each channel, and performance of each channel can be improved.

In some embodiments, the first reporting information may be carried through any one of the following:
an MAC CE signaling, an Msg3, or an MsgA.

At S2: the network device transmits second indication information to the terminal device. The second indication information is used to indicate a fourth DMRS.

Exemplarily, the second indication information may indicate one or more of the following parameters of the fourth DMRS:
a type of the fourth DMRS;
a power parameter corresponding to the fourth DMRS;
a frequency domain location of a time-frequency resource occupied by the fourth DMRS;
a time domain location of the time-frequency resource occupied by the fourth DMRS;
a sequence generation method corresponding to the fourth DMRS; or,
a sequence generation parameter corresponding to the fourth DMRS.

In the random access procedure, information content carried in the Msg3, the MsgA, and the MAC CE signaling is limited. Therefore, only some parameters of the fourth DMRS may be carried in the first reporting information carried through the Msg3, the MsgA, or the MAC CE signaling. For example, the first reporting information may indicate only the type of the fourth DMRS, or the power parameter of the fourth DMRS.

In an embodiment of the present disclosure, the network device may supplement or update the parameters of the fourth DMRS through the second indication information. That is, the parameter indicated in the second indication information may be additionally indicated in addition to a predetermined parameter, or one or more of the above-described parameters, or the parameter indicated through the above-described first information.

For example, when some parameters of the fourth DMRS are indicated in the first reporting information and other parameters are not indicated, the network device may further indicate more parameters related to the fourth DMRS through the second indication information, or update some parameters indicated in the original first indication information. In this way, flexibility of parameter indication can be improved, the network device can optimize the pilot signal reported by the terminal device to a certain extent, thereby improving communication performance.

At S3, the first terminal device uses the corresponding fourth DMRS to perform data reception and/or data transmission based on the second indication information.

Thus, according to the method provided by the embodiment of the present disclosure, the terminal device can indicate the first pilot signal to the network device through the Msg3 and the MsgA in an early stage of the random access procedure. In this way, the network device and the terminal device can communicate using the optimized pilot signal before establishing the RRC connection, thus improving the communication performance and improving the user experience.

### Third embodiment

In the third embodiment, a terminal device may indicate a DMRS to a network device through an Msg3 or an MsgA. The third embodiment may include the following operations.

At S1, the terminal device transmits first reporting information to the network device. The first reporting information is used to indicate a fourth DMRS.

Both the network device and the terminal device may define multiple sets of configurations related to the fourth DMRS in advance, and the first reporting information may indicate which set of configuration is to be used. For example, the first reporting information may only carry an index value/identifier of the fourth DMRS.

The first reporting information in the third embodiment is the first information described above.

It should also be noted that the terminal device may select a most matching DMRS (herein referred to as the fourth DMRS) according to one or more of a type of a DMRS supported by the terminal device, wireless channel environment between the terminal device and the network device, or a speed measurement result, and indicate an index value of the fourth DMRS through the first reporting information.

In some embodiments, a RE used by the fourth DMRS does not overlap with a RE used by a data signal, i.e., the fourth DMRS uses an RE different from that of the data signal (referred to as a fifth DMRS). It can be understood that the orthogonal DMRS is used to avoid introducing a new DMRS and reduce system complexity.

In some embodiments, one or more or all of the REs used by the fourth DMRS are also REs used by the data signal (i.e., shared REs) (denoted as a sixth DMRS). By using a non-orthogonal DMRS, more REs can be used for data signals, transmission rate can be increased, or transmission reliability can be improved.

The fourth DMRS may be for different channels or different data/control information transmissions.

For example, the fourth DMRS may be a DMRS for subsequent downlink control channel transmission (for example, a DMRS in a PDCCH), or a DMRS for subsequent downlink data channel transmission (for example, a DMRS in a PDSCH), or a DMRS for subsequent downlink data channel transmission and a DMRS for subsequent downlink control channel transmission (for example, a DMRS in a PDSCH and a DMRS in a PDCCH).

For example, the fourth DMRS may be a DMRS for subsequent uplink control channel transmission (for example, a DMRS in a PUCCH), or a DMRS for subsequent uplink data channel transmission (for example, a DMRS in a PUSCH), or a DMRS for subsequent uplink data channel transmission and a DMRS for subsequent uplink control channel transmission (for example, a DMRS in a PUSCH and a DMRS in a PUCCH).

For example, the fourth DMRS may be a DMRS for subsequent downlink and uplink control channel transmissions (for example, a DMRS in a PDCCH and a DMRS in a PUCCH), or a DMRS for subsequent downlink and uplink data channel transmissions (for example, a DMRS in a PDSCH and a DMRS in a PUSCH), or a DMRS for subsequent downlink and uplink data channel transmissions and a DMRS for subsequent downlink and uplink control channel transmissions (for example, a DMRS in a PDSCH, a DMRS in a PUSCH, a DMRS in a PDCCH and a DMRS in a PUCCH).

In some embodiments, which channel or channels the fourth DMRS is specific to may be determined according to a predetermined rule.

In some embodiments, which channel or channels the fourth DMRS is specific to may be indicated through the first reporting information. For example, the first reporting information may include one or more eleventh fields, and different values of the eleventh field may indicate which channel or channels the fourth DMRS is specific to.

It can be understood that the first pilot signal can be indicated for different channels, so that the different channels can be distinguished, an optimal pilot signal can be selected for each channel, and performance of each channel can be improved.

In some embodiments, the first reporting information may be carried through any one of the following:
an MAC CE signaling, an Msg3, or an MsgA.

Further, the terminal device and the network device may perform any one of the following operations.

At S2A (option 1), the terminal device performs reception on an available channel (i.e., one or more of the above-described downlink data channel, downlink control channel, uplink data channel, and uplink control channel) according to the fourth DMRS.

At S2B (option 2), the network device transmits third indication information to the terminal device, where the third indication information may indicate one or more of the following parameters:
a power parameter corresponding to the fourth DMRS;
a frequency domain location of a time-frequency resource occupied by the fourth DMRS;
a time domain location of the time-frequency resource occupied by the fourth DMRS;
a sequence generation method corresponding to the fourth DMRS; or,
a sequence generation parameter corresponding to the fourth DMRS.

It can be understood that the above parameters indicated in the third indication information may be supplements or updates to the indicated parameters of the fourth DMRS. That is, the above-described parameters indicated in the third indication information may be additionally indicated in addition to the parameters predetermined in S1.

For example, when some parameters of the fourth DMRS are predetermined, and other parameters are not predetermined, at this time, the network device may further indicate more parameters related to the fourth DMRS through the third indication information, or update some parameters of the fourth DMRS predetermined in advance. The flexibility of parameter indication can be improved, the network device can optimize the pilot signal reported by the terminal device to a certain extent, and the communication performance is improved.

At S2C (option 3): the network device transmits third indication information, where the third indication information indicates that the fourth DMRS is to be used. In the subsequent transmission, the first terminal device may perform corresponding reception and/or transmission according to the fourth DMRS. Compared with option 1, the network device may confirm the fourth DMRS through the third indication information, so that the network device and the terminal device can understand each other, to ensure reliability of communication.

S2D (option 4): the network device transmits third indication information, where the third indication information instructs the terminal to transmit confirmation information (for example, confirming the use of the fourth DMRS), and then the terminal device transmits the confirmation information. In the subsequent transmission, the terminal device may perform corresponding reception and/or transmission according to the fourth DMRS. Compared with option 1, the network device may confirm the fourth DMRS through the third indication information, so that the network device and the terminal device can understand the same, to ensure reliability of communication.

Thus, according to the method provided by the embodiment of the present disclosure, the terminal device can indicate the first pilot signal to the network device through Msg3 and MsgA in the early stage of the random access procedure. In this way, the network device and the terminal device can communicate using the optimized pilot signal before establishing the RRC connection, thus improving the communication performance and improving the user experience.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described embodiments can be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as contents of the present disclosure. For another example, on the premise that there is no conflict, each embodiment described in the present disclosure and/or the technical features in each embodiment can be arbitrarily combined with the related art, and a technical solution obtained after the combination should also fall within the scope of protection of the present disclosure.

It should also be understood that in various method embodiments of the present disclosure, the order of the above-described processes does not mean the sequence of execution, and the sequence of execution of each process should be determined by its function and internal logic, and should not constitute any limitation on the implementation of the embodiments of the present disclosure.

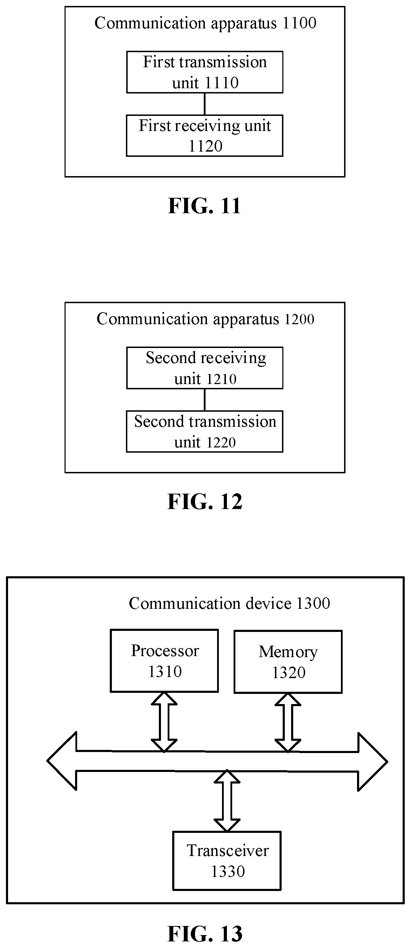

FIG. 11 is a schematic structural diagram of an apparatus for communication 1100 according to an embodiment of the present disclosure, and is applied to a terminal device. As illustrated in FIG. 11, the apparatus for communication 1100 includes a first transmission unit 1110.

The first transmission unit 1110 is configured to transmit first information indicating a first pilot signal to a network device.

In some embodiments, the first pilot signal is a first type of pilot signal or a second type of pilot signal. The first type of pilot signal refers to a pilot signal whose time-frequency resources are not used for transmitting a data signal, and the second type of pilot signal refers to a pilot signal at least part of whose time-frequency resources are used for transmitting the data signal.

In some embodiments, the first information is transmitted via a first random access signal. The first random access signal is associated with a pilot signal. The first pilot signal is a pilot signal associated with the first random access signal.

In some embodiments, the communication apparatus 1100 further includes a first receiving unit 1120. The first receiving unit 1120 is configured to receive second information transmitted by the network device. The second information is used to configure multiple random access signal sets. The multiple different random access signal sets are associated with different pilot signals.

The first random access signal is any one random access signal in a random access signal set associated with the first pilot signal among the multiple random access signal sets.

In some embodiments, the multiple random access signal sets maintain different configurations on one or more of the following parameters:
a signal sequence;
a signal root sequence;
a parameter used to generate the signal sequence;
a time domain resource;
a frequency domain resource;
a RACH occasion;
a preamble; or
a preamble format.

In some embodiments, the second information is carried by one or more of the following:
a broadcast message;
a system message;
a dedicated signaling; or
a RRC signaling.

In some embodiments, the second information is further used to indicate one or more of the following parameters of the first pilot signal; alternatively, one or more of the following parameters of the first pilot signal are predefined:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal.

The type includes a first type of pilot signal or a second type of pilot signal. The first type of pilot signal refers to a pilot signal whose time-frequency resources are not used for transmitting a data signal, and the second type of pilot signal refers to a pilot signal at least part of whose time-frequency resources are used for transmitting the data signal.

In some embodiments, the first information is further used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal.

In some embodiments, the first information is used to indicate the first pilot signal in multiple pilot signals, configuration parameters of the multiple pilot signals are predefined.

In some embodiments, the first information is carried by any one of the following:
a medium access control control element (MAC CE) signaling;
a random access message 3 (Msg 3); or
a random access message A (Msg A).

In some embodiments, the first receiving unit 1120 is further configured to receive third information transmitted by the network device, where the third information is used to confirm the first pilot signal.

In some embodiments, the first receiving unit 1120 is further configured to receive fourth information transmitted by the network device, where the fourth information requests a confirmation of whether to use the first pilot signal.

In some embodiments, the first transmission unit 1110 is further configured to transmit response information of the fourth information to the network device. The response information is used to indicate that the first pilot signal is to be used or the first pilot signal is not used.

In some embodiments, the first receiving unit 1120 is further configured to receive fifth information transmitted by the network device. The fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal.

In some embodiments, the first receiving unit 1120 is further configured to receive sixth information transmitted by the network device. The sixth information is used to indicate one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or
a sequence generation parameter of the second pilot signal.

The second pilot signal is different from the first pilot signal in some or all of the parameters.

In some embodiments, the first and/or second pilot signals are for one or more of the following channels:
a downlink data channel;
a downlink control channel;
an uplink data channel; or
an uplink control channel.

In some embodiments, when the first information is a first random access signal, a downlink data channel for which the first pilot signal is used includes a PDSCH for transmitting a first random access response (RAR), and a downlink control channel for which the first pilot signal is used includes a PDCCH for scheduling the PDSCH for the first RAR. The first RAR is response information of the first random access signal.

In some embodiments, a channel for which the first pilot signal is used is determined based on one or more of the following:
a pre-defined rule;
the first information;
second information transmitted by the network device; or,
seventh information transmitted by the network device.

In some embodiments, when the first pilot signal is the second type of pilot signal, the power parameter of the first pilot signal includes one or more of the following:
a ratio of a power of the first pilot signal transmitted on a first time-frequency resource to a total power on a second time-frequency resource;
a ratio of a power of a data signal transmitted on the first time-frequency resource to the total power on the second time-frequency resource;
a ratio of the power of the first pilot signal transmitted on the first time-frequency resource to the power of the data signal transmitted on the first time-frequency resource; or
a ratio of the power of the data signal transmitted on the first time-frequency resource to the power of the first pilot signal transmitted on the first time-frequency resource.

The first time-frequency resource is any one of the at least part of the time-frequency resources. The second time-frequency resource is any one of the at least part of time-frequency resources, or the second time-frequency resource is any one of other time-frequency resources other than the at least part of the time-frequency resources.

In some embodiments, the frequency domain location is determined based on one or more of the following:
a frequency domain density;
a frequency domain offset value; or,
a frequency domain pattern.

In some embodiments, the operation of indicating the frequency domain location of the time-frequency resource occupied by the first pilot signal includes that:
indicating the frequency domain location by a first bitmap; and/or,
indicating the frequency domain location by using an identifier of a frequency domain resource.

In some embodiments, the time domain location is determined based on one or more of:
a time domain density;
a time domain offset value; or,
a time domain pattern.

In some embodiments, the operation of indicating the time domain location of the time-frequency resource occupied by the first pilot signal includes that:
indicating the time domain location by a second bitmap; and/or,
indicating the time domain location by using an identifier of a time domain resource.

In some embodiments, the sequence generation parameter of the first pilot signal include one or more of the following:
an identifier of a time domain resource in the time-frequency resource occupied by the first pilot signal;
an identifier of a system frame number in which the first pilot signal is located;
an identifier of a cell in which the first pilot signal is located;
an identifier of a carrier on which the first pilot signal is located;
an identifier of a port of the first pilot signal;
a scrambling parameter of the first pilot signal; or,
an identifier of a control channel for the data signal.

In some embodiments, the first transmission unit 1110 is further configured to transmit capability information to the network device. The capability information characterizes that the terminal device supports a first type of pilot signal, and the first type of pilot signal refers to a pilot signal in which at least part of time-frequency resources are used for transmitting a data signal.

In some embodiments, the capability information is a capability for any of the following objects:
a frequency band;
a frequency band combination;
each frequency band in the frequency band combination;
each carrier in each frequency band in the frequency band combination;
a frequency band range; or,
the terminal device.

Those skilled in the art should understand that the related description of the above-described communication apparatus according to the embodiment of the present disclosure can be understood with reference to the related description of the communication method according to the embodiments of the present disclosure.

FIG. 12 is a schematic structural diagram of an apparatus for communication 1200 according to an embodiment of the present disclosure, and is applied to a network device. As illustrated in FIG. 12, the communication apparatus 1200 may include a second receiving unit 1210.

The second receiving unit 1210 is configured to receive first information transmitted by a terminal device, where the first information is used to indicate a first pilot signal.

In some embodiments, the first pilot signal is a first type of pilot signal or a second type of pilot signal. The first type of pilot signal refers to a pilot signal whose time-frequency resources are not used for transmitting a data signal, and the second type of pilot signal refers to a pilot signal at least part of whose time-frequency resources are used for transmitting the data signal.

In some embodiments, the first information is transmitted via a first random access signal. The first random access signal is associated with a pilot signal. The first pilot signal is a pilot signal associated with the first random access signal.

In some embodiments, the communication device 1200 further includes a second transmission unit 1220. The second transmission unit 1220 is configured to transmit second information to the terminal device. The second information is used to configure multiple random access signal sets, and different random access signal sets are associated with different pilot signals.

The first random access signal is any random access signal in a random access signal set associated with the first pilot signal among the multiple random access signal sets.

In some embodiments, the multiple random access signal sets maintain different configurations on one or more of the following parameters:
a signal sequence;
a signal root sequence;
a parameter used to generate the signal sequence;
a time domain resource;
a frequency domain resource;
a RACH occasion;
a preamble; or,
a preamble format.

In some embodiments, the second information is carried by one or more of the following signaling:
a broadcast message;
a system message;
a dedicated signaling; or,
a radio resource control (RRC) signaling.

In some embodiments, the second information is further used to indicate one or more of the following parameters of the first pilot signal; alternatively, one or more of the following parameters of the first pilot signal are predefined:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for of the first pilot signal ; or,
a sequence generation parameter of the first pilot signal.

The type includes a first type of pilot signal or a second type of pilot signal. The first type of pilot signal refers to a pilot signal in which the occupied time-frequency resources are not used for transmitting a data signal, and the second type of pilot signal refers to a pilot signal in which at least part of the occupied time-frequency resources are used for transmitting the data signal.

In some embodiments, the first information is further used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or,
a sequence generation parameter of the first pilot signal.

In some embodiments, the first information is used to indicate the first pilot signal of multiple pilot signals. Configuration parameters of the multiple pilot signals are predefined.

In some embodiments, the first information is carried by any one of:
a medium access control control element (MAC CE) signaling;
a random access message 3 (Msg 3); or,
a random access message A (Msg A).

In some embodiments, the second transmission unit 1220 is further configured to transmit third information to the terminal device. The third information is used to confirm the first pilot signal.

In some embodiments, the second transmission unit 1220 is further configured to transmit fourth information to the terminal device. The fourth information requests a confirmation of whether or not to use the first pilot signal.

In some embodiments, the second receiving unit 1210 is further configured to receive response information of the fourth information transmitted by the terminal device. The response information is used to indicate that the first pilot signal is to be used or the first pilot signal is not used.

In some embodiments, the second transmission unit 1220 is further configured to transmit fifth information to the terminal device. The fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot; or,
a sequence generation parameter of the first pilot signal.

In some embodiments, the second transmission unit 1220 is further configured to transmit sixth information to the terminal device. The sixth information is used to indicate one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or,
a sequence generation parameter of the second pilot signal.

The second pilot signal is different from the first pilot signal in some or all of the parameters.

In some embodiments, the first and/or second pilot signals are for one or more of the following channels:
a downlink data channel;
a downlink control channel;
an uplink data channel; or,
an uplink control channel.

In some embodiments, when the first information is a first random access signal, a downlink data channel for which the first pilot signal is used includes a PDSCH for transmitting a first RAR, and a downlink control channel for which the first pilot signal is used includes a PDCCH for scheduling the PDSCH for the first RAR. The first RAR is response information of the first random access signal.

In some embodiments, a channel for which the first pilot signal is used is determined based on one or more of:
a pre-defined rule;
the first information;
second information; or,
seventh information transmitted by the network device.

In some embodiments, when the first pilot signal is a second type of pilot signal, the power parameter of the first pilot signal includes one or more of the following:
a ratio of a power of the first pilot signal transmitted on a first time-frequency resource to a total power on a second time-frequency resource;
a ratio of a power of a data signal transmitted on the first time-frequency resource to a total power on the second time-frequency resource;
a ratio of the power of the first pilot signal transmitted on the first time-frequency resource to the power of the data signal transmitted on the first time-frequency resource; or,
a ratio of the power of the data signal transmitted on the first time-frequency resource to the power of the first pilot signal transmitted on the first time-frequency resource.

The first time-frequency resource is any one of the at least part of the time-frequency resources; the second time-frequency resource is any one of the at least part of the time-frequency resources, or the second time-frequency resource is any one of other time-frequency resources other than the at least part of the time-frequency resources.

In some embodiments, the frequency domain location includes one or more of the following:
a frequency domain density;
a frequency domain offset value; or,
a frequency domain pattern.

In some embodiments, the operation of indicating the frequency domain location of the time-frequency resource occupied by the first pilot signal includes that:
indicating the frequency domain location by a first bitmap; and/or,
indicating the frequency domain location by using an identifier of a frequency domain resource.

In some embodiments, the time domain location includes one or more of the following:
a time domain density;
a time domain offset value; or,
a time domain pattern.

In some embodiments, the operation of indicating the time domain location of the time-frequency resource occupied by the first pilot signal includes that;
indicating the time domain location by a second bitmap; and/or,
indicating the time domain location by using an identifier of a time domain resource.

In some embodiments, the sequence generation parameter of the first pilot signal includes one or more of the following:
an identifier of a time domain resource in the time-frequency resource occupied by the first pilot signal;
an identifier of a system frame number in which the first pilot signal is located;
an identifier of a cell in which the first pilot signal is located;
an identifier of a carrier on which the first pilot signal is located;
an identifier of a port of the first pilot signal;
a scrambling parameter of the first pilot signal; or,
an identifier of a control channel for the data signal.

In some embodiments, the second receiving unit 1210 is further configured to receive capability information transmitted by the terminal device. The capability information characterizes that the terminal device supports a first type of pilot signal, and the first type of pilot signal refers to a pilot signal in which at least part of time-frequency resources are used for transmitting a data signal.

In some embodiments, the capability information is a capability for any of the following objects:
a frequency band;
a frequency band combination;
each frequency band in the frequency band combination;
each carrier in each frequency band in the frequency band combination;
a frequency band range; or,
the terminal device.

Those skilled in the art should understand that the related description of the above-described communication apparatus according to the embodiment of the present disclosure can be understood with reference to the related description of the communication method according to the embodiment of the present disclosure.

FIG. 13 is a schematic structural diagram of a communication device according to an embodiment of the present disclosure. The communication device 1300 may be a terminal device or a network device. The communication device 1300 shown in FIG. 13 may include a processor 1310 and a memory 1320.

The memory 1320 may be used to store computer executable instructions.

The processor 1310 is connected with the memory 1320 and is configured to implement the methods in the embodiment of the present disclosure by executing computer-executable instructions.

The memory 1320 may be a separate device independent of the processor 1310 or may be integrated into the processor 1310.

In some embodiments, as shown in FIG. 13, the communication device 1300 may further include a transceiver 1330. The processor 1310 may control the transceiver 1330 to communicate with other devices, in particular, may transmit information or data to or receive information or data transmitted by other devices.

Here, the transceiver 1330 may include a transmitter and a receiver. The transceiver 1330 may further include antennas, and the number of antennas may be one or more.

In some embodiments, the communication device 1300 may be a terminal device in the embodiments of the present disclosure, and the communication device 1300 may implement corresponding procedures implemented by the terminal device in each method of the embodiments of the present disclosure, and will not be repeated here for the sake of brevity.

In some embodiments, the communication device 1300 may be the network device in the embodiments of the present disclosure, and the communication device 1300 may implement corresponding processes implemented by the network device in each method of the embodiments of the present disclosure, and will not be described herein for the sake of brevity.

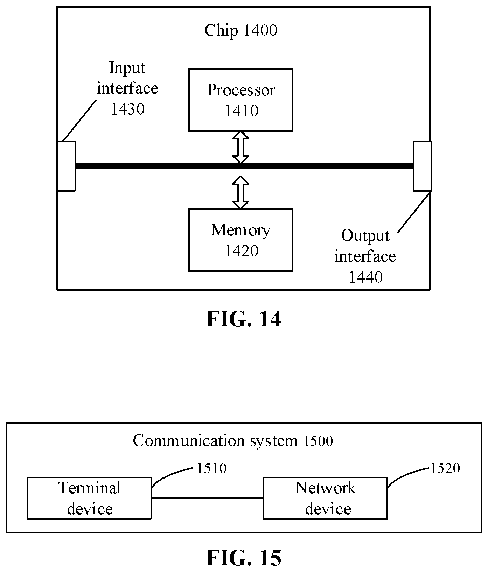

FIG. 14 is a schematic structural diagram of a chip according to an embodiment of the present disclosure. The chip 1400 shown in FIG. 14 includes a processor 1410 and a memory 1420.

The processor 1410 may call and run a computer program from the memory 1420 to cause a device on which the chip is mounted to execute the method in the embodiments of the present disclosure.

The memory 1420 may be a separate device independent of the processor 1410 or may be integrated into the processor 1410.

In some embodiments, the chip 1400 may further include an input interface 1430. The processor 1410 may control the input interface 1430 to communicate with other devices or chips, specifically, may acquire information or data transmitted by other devices or chips.

In some embodiments, the chip 1400 may further include an output interface 1440. The processor 1410 may control the output interface 1440 to communicate with other devices or chips, specifically, may output information or data to other devices or chips.

In some embodiments, the chip can be applied to the terminal device in the embodiments of the present disclosure, and the chip can implement corresponding processes implemented by the terminal device in each method of the embodiments of the present disclosure, and will not be repeatedly described here for the sake of simplicity.

In some embodiments, the chip can be applied to the network device in the embodiments of the present disclosure, and the chip can implement corresponding processes implemented by the network device in each method of the embodiments of the present disclosure, and will not be repeated here for the sake of brevity.

It should be understood that the chip mentioned in the embodiments of the present disclosure may also be referred to as a system-on-chip, a system chip, a chip system, or a system-on-chip chip.

FIG. 15 is a schematic block diagram of a communication system according to an embodiment of the present disclosure. As shown in FIG. 15, the communication system 1500 includes a terminal device 1510 and a network device 1520.

Here, the terminal device 1510 may be used to implement the corresponding functions implemented by the terminal device in the above-described method, and the network device 1520 may be used to implement the corresponding functions implemented by the network device in the above-described method, and the description thereof will not be repeated here for the sake of brevity.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a digital signal processor (DSP), an application specific integrated circuit (ASIC), an field programmable gate array (FPGA) or other programmable logic devices, a discrete gate or transistor logic device, or a discrete hardware component. The methods, operations, and logical block diagrams disclosed in the embodiments of the present disclosure may be implemented or executed. The general purpose processor may be a microprocessor or the processor may be any conventional processor or the like. The operations of the method disclosed in connection with the embodiments of the present disclosure may be directly embodied as execution by a hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the operations of the above method.

It should be understood that the memory in the embodiments of the present disclosure may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of example, but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct Rambus RAM (DR RAM). It should be noted that the memory in the systems and methods described herein is intended to include, but is not limited to, these and any other suitable type of memory.

It should be understood that the memory described above is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDRAM), an enhanced SDRAM (ESDRAM), a synch link dynamic random access memory (SLDRAM), a direct Rambus RAM (DR RAM), and the like. That is, the memory in the embodiments of the present disclosure is intended to include, but is not limited to, these and any other suitable type of memory.

Embodiments of the present disclosure also provide a computer-readable storage medium storing a computer program, and when executed by at least one processor, the computer program implements the methods in the embodiment of the present disclosure.

In some embodiments, the computer-readable storage medium can be applied to the terminal device in the embodiment of the present disclosure, and the computer program causes the computer to execute corresponding processes implemented by the terminal device in each method of the embodiments of the present disclosure, and will not be described herein for the sake of brevity.

In some embodiments, the computer-readable storage medium can be applied to the network device in the embodiment of the present disclosure, and the computer program causes the computer to execute corresponding processes implemented by the network device in each method of the embodiments of the present disclosure, and will not be described herein for the sake of brevity.

Embodiments of the present disclosure also provide a computer program product including a computer storage medium storing a computer program including instructions executable by at least one processor that, when executed by the at least one processor, implement methods in the embodiment of the present disclosure.

In some embodiments, the computer program product can be applied to the terminal device in the embodiment of the present disclosure, and the computer program instructions cause the computer to execute corresponding processes implemented by the terminal device in each method of the embodiments of the present disclosure, and will not be described herein for the sake of brevity.

In some embodiments, the computer program product can be applied to the network device in the embodiment of the present disclosure, and the computer program instructions cause the computer to execute corresponding processes implemented by the network device in each method of the embodiments of the present disclosure, and will not be described herein for the sake of brevity.

An embodiment of the present disclosure also provides a computer program that causes a computer to execute the method in the embodiment of the present disclosure.

In some embodiments, the computer program can be applied to the terminal device in the embodiments of the present disclosure, and when the computer program is run on the computer, the computer executes the corresponding process implemented by the terminal device in each method of the embodiments of the present disclosure, which is not repeated here for the sake of brevity.

In some embodiments, the computer program can be applied to the network device in the embodiments of the present disclosure, and when the computer program is run on the computer, the computer executes the corresponding process implemented by the network device in each method of the embodiments of the present disclosure, which is not described herein for the sake of brevity.

Those of ordinary skill in the art will appreciate that the elements and algorithmic steps of the various examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. Furthermore, the coupling or direct coupling or communication connection between each other shown or discussed may be an indirect coupling or communication connection through some interface, device or unit, and may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a read-only memory (ROM), a random access memory (RAM), a magnetic disk, or an optical disk that can store a program code.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be subject to the scope of protection of the claims.

## Claims

1. A method for communication, comprising:
transmitting, by a terminal device, first information to a network device, wherein the first information is used to indicate a first pilot signal.

2. The method of claim 1, wherein the first pilot signal is a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

3. The method of claim 1 or 2, wherein the first information is transmitted via a first random access signal, the first random access signal being associated with a pilot signal, and the first pilot signal being a pilot signal associated with the first random access signal.

4. The method of claim 3, further comprising:
receiving, by the terminal device, second information transmitted by the network device,
wherein the second information is used to configure a plurality of random access signal sets, different random access signal sets being associated with different pilot signals; and
wherein the first random access signal is any random access signal in a random access signal set associated with the first pilot signal in the plurality of random access signal sets.

5. The method of claim 4, wherein the plurality of random access signal sets maintain different configurations on one or more of the following parameters:
a signal sequence;
a signal root sequence;
a parameter used to generate the signal sequence;
a time domain resource;
a frequency domain resource;
an random access channel (RACH) occasion;
a preamble; or
a preamble format.

6. The method of claim 4 or 5, wherein the second information is carried by one or more of the following:
a broadcast message;
a system message;
a dedicated signaling; or
a radio resource control (RRC) signaling.

7. The method of any one of claims 4 to 6, wherein the second information is further used to indicate one or more of the following parameters of the first pilot signal; or, one or more of the following parameters of the first pilot signal are predefined:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal ,
wherein the type of the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

8. The method of claim 1 or 2, wherein the first information is further used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal,
wherein the type of the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

9. The method of claim 1 or 2, wherein the first information is used to indicate the first pilot signal in a plurality of pilot signals, configuration parameters of the plurality of pilot signals being predefined.

10. The method of claim 8 or 9, wherein the first information is carried by any one of the following:
a medium access control control element (MAC CE) signaling;
a random access message 3 (Msg 3); or
a random access message A (Msg A).

11. The method of any one of claims 1 to 10, further comprising:
receiving, by the terminal device, third information transmitted by the network device, wherein third information is used to confirm the first pilot signal.

12. The method of any one of claims 1 to 10, further comprising:
receiving, by the terminal device, fourth information transmitted by the network device, wherein the fourth information is used for requesting a confirmation of whether to use the first pilot signal.

13. The method of claim 12, further comprising:
transmitting, by the terminal device, response information of the fourth information to the network device, wherein the response information is used to indicate that the first pilot signal is to be used or the first pilot signal is not used.

14. The method of any one of claims 1 to 13, further comprising:
receiving, by the terminal device, fifth information transmitted by the network device, wherein the fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal;
wherein the type of the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

15. The method of any one of claims 1 to 13, further comprising:
receiving, by the terminal device, sixth information transmitted by the network device, wherein the sixth information is used to indicate one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or
a sequence generation parameter of the second pilot signal,
wherein the second pilot signal is different from the first pilot signal in some or all parameters, and the type of the second pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

16. The method of any one of claims 1 to 15, wherein the first pilot signal and/or a second pilot signal are used for one or more of the following channels:
a downlink data channel;
a downlink control channel;
an uplink data channel; or
an uplink control channel.

17. The method of claim 16, wherein, in a case where the first information is transmitted via a first random access signal, a downlink data channel for which the first pilot signal is used comprises a physical downlink shared channel (PDSCH) for transmitting a first random access response (RAR), and a downlink control channel for which the first pilot signal is used comprises a physical downlink control channel (PDCCH) for scheduling the PDSCH for the first RAR, the first RAR being response information of the first random access signal.

18. The method of claim 16 or 17, wherein a channel for which the first pilot signal is used is determined based on one or more of the following:
a pre-defined rule;
the first information;
second information transmitted by the network device; or
seventh information transmitted by the network device.

19. The method of any one of claims 7 or 8 or 14, wherein when the first pilot signal is the second type of pilot signal, the power parameter of the first pilot signal comprises one or more of the following:
a ratio of a power of the first pilot signal transmitted on a first time-frequency resource to a total power on a second time-frequency resource;
a ratio of a power of the data signal transmitted on the first time-frequency resource to the total power on the second time-frequency resource;
a ratio of the power of the first pilot signal transmitted on the first time-frequency resource to the power of the data signal transmitted on the first time-frequency resource; or
a ratio of the power of the data signal transmitted on the first time-frequency resource to the power of the first pilot signal transmitted on the first time-frequency resource,
wherein the first time-frequency resource is any one of the at least part of the time-frequency resources; the second time-frequency resource is any one of the at least part of the time-frequency resources, or the second time-frequency resource is any one of other time-frequency resources other than the at least part of the time-frequency resources.

20. The method of any one of claims 7 or 8 or 14, wherein the frequency domain location is determined based on one or more of the following:
a frequency domain density;
a frequency domain offset value; or
a frequency domain pattern.

21. The method of any one of claims 7 or 8 or 14, wherein indicating the frequency domain location of the time-frequency resource occupied by the first pilot signal comprises:
indicating the frequency domain location by a first bitmap; and/or
indicating the frequency domain location by using an identifier of a frequency domain resource.

22. The method of any of claims 7 or 8 or 14, wherein the time domain location is determined based on one or more of the following:
a time domain density;
a time domain offset value; or
a time domain pattern.

23. The method of any one of claims 7 or 8 or 14, wherein indicating the time domain location of the time-frequency resource occupied by the first pilot signal comprises:
indicating the time domain location by a second bitmap; and/or
indicating the time domain location by using an identifier of a time domain resource.

24. The method of any one of claims 7 or 8 or 14, wherein the sequence generation parameter of the first pilot signal comprises one or more of the following:
an identifier of a time domain resource in the time-frequency resource occupied by the first pilot signal;
an identifier of a system frame number in which the first pilot signal is located;
an identifier of a cell in which the first pilot signal is located;
an identifier of a carrier on which the first pilot signal is located;
an identifier of a port of the first pilot signal;
a scrambling parameter of the first pilot signal; or
an identifier of a control channel for the data signal.

25. The method of any one of claims 1 to 24, further comprising:
transmitting, by the terminal device, capability information to the network device, wherein the capability information characterizes that the terminal device supports a first type of pilot signal, at least part of time-frequency resources occupied by the first type of pilot signal being used for transmitting a data signal.

26. The method of claim 25, wherein the capability information is a capability for any one of the following:
a frequency band;
a frequency band combination;
each frequency band in the frequency band combination;
each carrier in each frequency band in the frequency band combination;
a frequency band range; or
the terminal device.

27. A method for communication, comprising:
receiving, by a network device, first information transmitted by a terminal device, wherein the first information is used to indicate a first pilot signal.

28. The method of claim 27, wherein the first pilot signal is a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

29. The method of claim 27 or 28, wherein the first information is transmitted via a first random access signal, the first random access signal being associated with a pilot signal, and the first pilot signal being a pilot signal associated with the first random access signal.

30. The method of claim 29, further comprising:
transmitting, by the network device, second information to the terminal device, wherein the second information is used to configure a plurality of random access signal sets, different random access signal sets being associated with different pilot signals; and
wherein the first random access signal is any random access signal in a random access signal set associated with the first pilot signal in the plurality of random access signal sets.

31. The method of claim 30, wherein the plurality of random access signal sets maintain different configurations on one or more of the following parameters:
a signal sequence;
a signal root sequence;
a parameter used to generate the signal sequence;
a time domain resource;
a frequency domain resource;
an random access channel (RACH) occasion;
a preamble; or
a preamble format.

32. The method of claim 30 or 31, wherein the second information is carried by one or more of the following:
a broadcast message;
a system message;
a dedicated signaling; or
a radio resource control (RRC) signaling.

33. The method of any one of claims 30 to 32, wherein the second information is further used to indicate one or more of the following parameters of the first pilot signal; or, one or more of the following parameters of the first pilot signal are predefined:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal ,
wherein the type of the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

34. The method of claim 27 or 28, wherein the first information is further used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter for the first pilot signal,
wherein the type of the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

35. The method of claim 27 or 28, wherein the first information is used to indicate the first pilot signal in a plurality of pilot signals, configuration parameters of the plurality of pilot signals being predefined.

36. The method of claim 34 or 35, wherein the first information is carried by any one of the following:
a medium access control control element (MAC CE) signaling;
a random access message 3 (Msg 3); or
a random access message A (Msg A).

37. The method of any one of claims 27 to 36, further comprising:
transmitting, by the network device, third information to the terminal device, wherein the third information is used to confirm the first pilot signal.

38. The method of any one of claims 27 to 36, further comprising:
transmitting, by the network device, fourth information to the terminal device, wherein the fourth information is used for requesting a confirmation of whether to use the first pilot signal.

39. The method of claim 38, further comprising:
receiving, by the network device, response information of the fourth information from the terminal device, wherein the response information is used to indicate that the first pilot signal is to be used or the first pilot signal is not used.

40. The method of any one of claims 27 to 39, further comprising:
transmitting, by the network device, fifth information to the terminal device, wherein the fifth information is used to indicate one or more of the following parameters of the first pilot signal:
a type of the first pilot signal;
a power parameter of the first pilot signal;
a frequency domain location of a time-frequency resource occupied by the first pilot signal;
a time domain location of the time-frequency resource occupied by the first pilot signal;
a sequence generation method for the first pilot signal; or
a sequence generation parameter of the first pilot signal,
wherein the type the first pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

41. The method of any one of claims 27 to 39, further comprising:
transmitting, by the network device, sixth information to the terminal device, wherein the sixth information is used to indicate one or more of the following parameters of a second pilot signal:
a type of the second pilot signal;
a power parameter of the second pilot signal;
a frequency domain location of a time-frequency resource occupied by the second pilot signal;
a time domain location of the time-frequency resource occupied by the second pilot signal;
a sequence generation method for the second pilot signal; or
a sequence generation parameter of the second pilot signal,
wherein the second pilot signal is different from the first pilot signal in some or all parameters, and the type of the second pilot signal comprises a first type of pilot signal or a second type of pilot signal, time-frequency resources occupied by the first type of pilot signal being not used for transmitting a data signal, and at least part of time-frequency resources occupied by the second type of pilot signal being used for transmitting the data signal.

42. The method of any one of claims 27 to 41, wherein the first pilot signal and/or a second pilot signal are used for one or more of the following channels:
a downlink data channel;
a downlink control channel;
an uplink data channel; or
an uplink control channel.

43. The method of claim 42, wherein, in a case where the first information is transmitted via a first random access signal, a downlink data channel for which the first pilot signal is used comprises a physical downlink shared channel (PDSCH) for transmitting a first random access response (RAR), and a downlink control channel for which the first pilot signal is used comprises a physical downlink control channel (PDCCH) for scheduling the PDSCH for the first RAR, the first RAR being response information of the first random access signal.

44. The method of claim 42 or 43, wherein a channel for which the first pilot signal is used is determined based on one or more of the following:
a pre-defined rule;
the first information;
second information; or
seventh information transmitted by the network device.

45. The method of any one of claims 33 or 34 or 40, wherein when the first pilot signal is the second type of pilot signal, the power parameter of the first pilot signal comprises one or more of the following:
a ratio of a power of the first pilot signal transmitted on a first time-frequency resource to a total power on a second time-frequency resource;
a ratio of a power of the data signal transmitted on the first time-frequency resource to the total power on the second time-frequency resource;
a ratio of the power of the first pilot signal transmitted on the first time-frequency resource to the power of the data signal transmitted on the first time-frequency resource; or
a ratio of the power of the data signal transmitted on the first time-frequency resource to the power of the first pilot signal transmitted on the first time-frequency resource,
wherein the first time-frequency resource is any one of the at least part of the time-frequency resources; the second time-frequency resource is any one of the at least part of the time-frequency resources, or the second time-frequency resource is any one of other time-frequency resources other than the at least part of the time-frequency resources.

46. The method of any one of claims 36 or 34 or 40, wherein the frequency domain location comprises one or more of the following:
a frequency domain density;
a frequency domain offset value; or
a frequency domain pattern.

47. The method of any one of claims 33 or 34 or 40, wherein indicating the frequency domain location of the time-frequency resource occupied by the first pilot signal comprises:
indicating the frequency domain location by a first bitmap; and/or
indicating the frequency domain location by using an identifier of a frequency domain resource.

48. The method of any one of claims 33 or 34 or 40, wherein the time domain location comprises one or more of the following:
a time domain density;
a time domain offset value; or
a time domain pattern.

49. The method of any one of claims 33 or 34 or 40, wherein indicating the time domain location of the time-frequency resource occupied by the first pilot signal comprises:
indicating the time domain location by a second bitmap; and/or
indicating the time domain location by using an identifier of a time domain resource.

50. The method of any one of claims 33 or 34 or 40, wherein the sequence generation parameter of the first pilot signal comprises one or more of the following:
an identifier of a time domain resource in the time-frequency resource occupied by the first pilot signal;
an identifier of a system frame number in which the first pilot signal is located;
an identifier of a cell in which the first pilot signal is located;
an identifier of a carrier on which the first pilot signal is located;
an identifier of a port of the first pilot signal;
a scrambling parameter of the first pilot signal; or
an identifier of a control channel for the data signal.

51. The method of any one of claims 27 to 50, further comprising:
receiving, by the network device, capability information transmitted by the terminal device, wherein the capability information characterizes that the terminal device supports a first type of pilot signal, at least part of time-frequency resources occupied by the first type of pilot signal being used for transmitting a data signal.

52. The method of claim 51, wherein the capability information is a capability for any one of the following:
a frequency band;
a frequency band combination;
each frequency band in the frequency band combination;
each carrier in each frequency band in the frequency band combination;
a frequency band range; or
the terminal device.

53. An apparatus for communication, applied to a terminal device, the apparatus comprising:
a first transmission unit, configured to transmit first information to a network device, wherein the first information is used to indicate a first pilot signal.

54. An apparatus for communication, applied to a network device, the apparatus comprising:
a second receiving unit, configured to receive first information transmitted by a terminal device, wherein the first information is used to indicate a first pilot signal.

55. A communication device, comprising:
a memory for storing computer-executable instructions; and
a processor coupled to the memory,
wherein the processor is configured to execute the computer-executable instructions to perform:
the method of any one of claims 1 to 26; or
the method of any one of claims 27 to 52.

56. A chip, comprising:
a processor for invoking and running a computer program from a memory to cause a device on which the chip is mounted to perform:
the method of any one of claims 1 to 26; or
the method of any one of claims 27 to 52.

57. A computer-readable storage medium having stored thereon a computer program which, when executed by at least one processor, implements the method of any one of claims 1 to 26, or implements the method of any one of claims 27 to 52.

58. A computer program product comprising a computer storage medium, wherein the computer storage medium stores a computer program comprising instructions executable by at least one processor that, when executed by the at least one processor, implement the method of any one of claims 1 to 26, or implement the method of any one of claims 27 to 52.

59. A computer program that causes a computer to perform the method of any one of claims 1 to 26 or to perform the method of any one of claims 27 to 52.
